# EUROPEAN PATENT SPECIFICATION

(11) **EP 2 483 078 B1**
(45) Date of publication and mention of the grant of the patent: **19.04.2017**
(21) Application number: 10763283.8
(22) Date of filing: 30.09.2010
(51) Int. Cl.: B32B 27/02, B32B 27/08

(54) **MULTI-LAYERED MELTBLOWN COMPOSITE AND METHODS FOR MAKING SAME**
MEHRSCHICHTIGES SCHMELZGEBLASENER-VERBUNDELEMENT UND HERSTELLUNGSVERFAHREN DAFÜR
MATERIAUX COMPOSITE CONSTITUE DE MULTICOUCHES OBTENUS PAR SOUFFLAGE ET LEURS PROCEDES DE FABRICATION

(30) Priority: 02.10.2009 US 248254 P
(43) Date of publication of application: 08.08.2012
(73) Proprietor: ExxonMobil Chemical Patents Inc., Baytown, TX 77520 (US)
(72) Inventor: RICHESON, Galen, C., Humble TX 77346 (US); WESTWOOD, Alistair, D., Kingwood TX 77345 (US); FERRY, William, Michael, Houston TX 77059 (US)
(74) Representative: ExxonMobil Chemical Europe Inc.
(86) International application number: PCT/US2010/050950
(87) International publication number: WO 2011/041575

(56) References cited:
- WO-A1-00/38911
- WO-A1-01/00917
- WO-A1-2010/039583
- WO-A1-2010/098792
- WO-A2-00/37723
- US-A1- 2007 092 704

## Description

### FIELD OF THE INVENTION

Embodiments provided herein generally relate to multilayer nonwoven fabrics and methods for making the same. More particularly, embodiments provided herein relate to multi-layered, meltblown composite structures having elastic core layers and aesthetically pleasing facing layers suitable for use in elastic articles and methods for making same.

### BACKGROUND OF THE INVENTION

### Description of the Related Art

Elastomers are useful as elastic nonwovens or films in applications ranging from waistbands, side panels, closure systems, and chasses for baby diapers, adult incontinence and personal hygiene garments, as well as other applications. Most of these elastic closures are constructed with facing layers that include a nonwoven substrate that is plastic in properties and provides aesthetic attributes such as touch and feel. Examples of such include those disclosed in U.S. Patent Application Publication No. 2008/0045917 and its counterparts. The plastic facing layers sandwich the elastic (core) layer, which is inherently elastomeric and possesses a rubbery feel that is not desirable for skin contact.

More recently, highly elastic, breathable, nonwoven fabric with the necessary aesthetic qualities that require no form of mechanical activation have been desired. Existing products are complex laminates of an elastic film, and are typically a styrenic block copolymer ("SBC") or polyurethane as the elastic film that can have polyolefin skins coextruded onto the film to prevent blocking, and nonwovens in order to provide the correct aesthetic (a soft, fluffy, cushion-like texture) and in certain constructions a hot melt glue layer to bond the nonwoven to either side of the elastic film. These types of constructions, once formed, are often not elastic due to the constraining influence of the inelastic components such as the polyolefin skin layers, adhesive, and nonwoven facing layers.

In order to remove the constraining influence of non-elastic elements, many composites require a mechanical stretching or activation process in order to stretch or break the non-elastic components. The mechanical stretching removes the constraints and creates an elastic composite controlled by the SBC film. Furthermore, such composites require the film to be apertured or perforated to make these laminates breathable. This process involves the controlled puncturing/tearing of the film with the associated concerns for film failure and increased scrap rates.

Work in this area has been discussed in U.S. Patent No(s). 5,272,003, 5,366,782, 6,075,179, 6,342,565, 7,026,404; U.S. Patent Application Publication No(s). 2008/0199673, 2008/0182116, 2008/0182940, 2008/0182468, 2006/0172647, 2005/0130544, 2005/0106978; and WO 2008/094337. There is still a need, however, for new fabrics and methods for making the same that can provide different performance attributes in a single fabric without activation processes being essential for product performance.

### SUMMARY OF THE INVENTION

Multilayer meltblown composites, articles made therefrom, and methods for making same are provided. In at least one specific embodiment, the multilayer meltblown composite includes: a first meltblown layer comprising one or more resins having an Ultimate Elongation (UE) of from 50% to 250%, as measured according to ASTM D412; a second meltblown layer comprising one or more resins having an Ultimate Elongation (UE) of 200% or more, as measured according to ASTM D412; and a third meltblown layer comprising one or more resins having an Ultimate Elongation (UE) of from 50% to 250%, as measured according to ASTM D412. Preferably, each resin has a MFR of about 2,000 dg/min or less, as measured by ASTM D1238, 2.16 kg, 230°C, and at least one of the first, second, and third meltblown layers comprises a propylene-α-olefin copolymer having a heat of fusion of 75 J/g or less.

In at least one specific embodiment, the method for making the multilayer meltblown composite comprises meltblowing a first material to form a first meltblown layer; meltblowing a second material to form a second meltblown layer; and meltblowing a third material to form a third meltblown layer, wherein each material is the same or different, each material includes at least one resin having a MFR of about 2,000 dg/min or less, as measured by ASTM D1238, 2.16 kg, 230°C, and at least one of the first, second, and third materials comprises an elastomer having an Ultimate Elongation (UE) of 200% or more, as measured according to ASTM D412.

### BRIEF DESCRIPTION OF THE DRAWINGS

So that the recited features of the present invention can be understood in detail, a more particular description of the invention, briefly summarized above, may be had by reference to embodiments, some of which are illustrated in the appended drawings.
Figure 1 depicts a schematic view of an illustrative meltblowing system for making a multilayer meltblown composite, according to one or more embodiments described.
Figure 2 depicts an enlarged schematic view of an illustrative die assembly, according to one or more embodiments described.
Figure 3 depicts a schematic of an illustrative meltblowing system for making a multilayer meltblown composite, according to one or more embodiments described. As depicted, the dies and collection surfaces can be vertically disposed.
Figure 4 depicts a schematic of another illustrative meltblowing system for making a multilayer meltblown composite, according to one or more embodiments described. As depicted, the dies and collection surfaces can be horizontally disposed.
Figure 5 depicts a schematic of another illustrative meltblowing system for making a multilayer meltblown composite, according to one or more embodiments described. As depicted, the collection surfaces can be vertically disposed and the dies can be arranged anywhere about the collection surfaces.
Figure 6 depicts a schematic of yet another illustrative meltblowing system for making a multilayer meltblown composite, according to one or more embodiments described. As depicted, the collection surfaces can be vertically disposed and the dies can be arranged anywhere about the collection surfaces. One or more facing layers can also be introduced to collection surfaces and fibers meltblown thereon.
Figure 7 depicts a schematic of still another illustrative meltblowing system for making a multilayer meltblown composite, according to one or more embodiments described. As depicted, the collection surfaces can be horizontally disposed and the dies can be arranged anywhere about the collection surfaces. Two or more dies can also be used to form the intermediate or core layer.
Figure 8 depicts a schematic of yet another illustrative meltblowing system for making a multilayer meltblown composite, according to one or more embodiments described. As depicted, the collection surfaces can be horizontal belts or conveyors, and the dies can be arranged anywhere about the collection surfaces.
Figure 9 depicts a schematic of still yet another illustrative meltblowing system for making a multilayer meltblown composite, according to one or more embodiments described. As depicted, a single collection surface can be used, and the dies can be arranged anywhere about the collection surfaces.

### DETAILED DESCRIPTION

A detailed description will now be provided. Each of the appended claims defines a separate invention, which for infringement purposes is recognized as including equivalents to the various elements or limitations specified in the claims. Depending on the context, all references below to the "invention" may in some cases refer to certain specific embodiments only. In other cases it will be recognized that references to the "invention" will refer to subject matter recited in one or more, but not necessarily all, of the claims. Each of the inventions will now be described in greater detail below, including specific embodiments, versions and examples, but the inventions are not limited to these embodiments, versions or examples, which are included to enable a person having ordinary skill in the art to make and use the inventions, when the information in this disclosure is combined with available information and technology.

The multilayer composite ("multilayer laminate") can include at least three meltblown layers made *in-situ.* Each meltblown layer can include one or more resins that are the same or different. Each resin can be an extensible resin, an elastic resin, or an inelastic resin. Suitable resins for any given layer can also be a blend of two or more resins, where each resin in extensible, inelastic, or elastic, such that the resulting blend can be extensible, inelastic, or elastic depending on the chosen resins, and their relatives amounts.

Preferably, the meltblown layers are disposed adjacent to one another. It is envisaged, however, that one or more spunlace, spunbond, spunlaid, in-situ entangled laminate layers, textiles, air laid, pulp, woven, super-absorbent polymer(s) ("SAP"), or films can be disposed on or between the meltblown layers.

As used herein, a "composite" or "fabric" is a structure, preferably flat but bendable and otherwise formable, having a thickness such that it impedes, but does not stop, the passage of air, the structure made from fibers that are bound together through chemical bonding, melt adhesion or weaving (mechanical linkage) such that they form the structure. As used herein, a "fiber" is a material whose length is very much greater than its diameter or breadth: the average diameter is on the order of 5 to 250 µm, and includes natural and/or synthetic substances.

As used herein, materials, resins, fibers, and/or fabrics referred to as being "elastic" are those that can recover at least 70% after 100% deformation. As used herein, materials, resins, fibers, and/or fabrics referred to as being "inelastic" are those that can recover less than 20% after 100% deformation. As used herein, materials, resins, fibers, and/or fabrics referred to as being "extensible" are those that can recover 20% to 70% after 100% deformation, as determined by ASTM D412. Extensible materials and fabrics are well known in the art and are those formed, in one instance, from a material that is extensible or by mechanically distorting or twisting a fabric (natural or synthetic) such as described in U.S. Patent No. 5,523,141.

Suitable resins can be or include cellulosics, nylons, polyacetals, polyalkylene naphthalates, polyesters, co-polyesters, polyurethane, polyamids, polyamides, polyolefins, polyolefin homopolymers, polyolefin copolymers, acrylic, and blends thereof. Except as stated otherwise, the term "copolymer" means a polymer derived from two or more monomers (including terpolymers, tetrapolymers, that can be arranged in a random, block, or grafted distribution), and the term "polymer" refers to any carbon-containing compound having repeat units from one or more different monomers.

Preferred cellulosic materials include rayon and viscose. A preferred polyacetal is polyoxymethylene copolymer. Preferred polyesters include polyolefin-terephthalates and polyalkylene terephthalates, such as poly(ethylene terephthalate) (PET), poly(butylene terephthalate) (PBT), and poly(cyclohexane dimethylene terephthalate) (PCT).

Preferred polyolefins can be prepared from mono-olefin monomers including, but not limited to, monomers having 2 to 8 carbon atoms, such as ethylene, propylene, 1-butene, isobutylene, 1-pentene, 1-hexene, 1-octene, 3-methyl-1-pentene, 4-methyl-1-pentene, 5-methyl-1-hexene, mixtures thereof and copolymers thereof with (meth)acrylates and/or vinyl acetates. Other suitable polyolefins can include one or more propylene homopolymers (100 wt% propylene-derived units), propylene copolymers, propylene-α-olefin copolymers, polypropylene impact copolymers (ICP), random copolymers (RCP) linear low density polyethylene, high density polyethylene, low density polyethylene, ethylene block copolymers (e.g., Infuse™ olefin block copolymers), styrenic block copolymers (e.g., Kraton™ styrenic copolymers), ethylene vinylacetates, urethanes, polyesters, and blends thereof. Certain specific extensible resins can include polyacrylonitrile, polybutylene terephthalate, polyethylene terephthalate (PET), polycyclohexylenedimethylene terephthalate (PCT), polyamide and/or acrylic.

As used herein, "polypropylene" refers to a propylene homopolymer, or a copolymer of propylene, or some mixture of propylene homopolymers and copolymers. In certain embodiments, the polypropylene described herein is predominately crystalline, thus the polypropylene may have a melting point (Tₘ) greater than 110°C or 115°C or 130°C. The term "crystalline," as used herein, characterizes those polymers which possess high degrees of inter-and intra-molecular order. In certain embodiments the polypropylene has a heat of fusion (H_{f}) greater than 60 J/g or 70 J/g or 80 J/g, as determined by DSC analysis. The heat of fusion is dependent on the composition of the polypropylene; the thermal energy for the highest order of polypropylene is estimated at 189 J/g that is, 100% crystallinity is equal to a heat of fusion of 189 J/g. A polypropylene homopolymer will have a higher heat of fusion than a copolymer or blend of homopolymer and copolymer.

In certain embodiments, the polypropylene(s) can be isotactic. Isotacticity of the propylene sequences in the polypropylenes can be achieved by polymerization with the choice of a desirable catalyst composition. The isotacticity of the polypropylenes as measured by ¹³C NMR, and expressed as a meso diad content is greater than 90% (meso diads [m] > 0.90) or 95% or 97% or 98% in certain embodiments, determined as in U.S. 4,950,720 by ¹³C NMR. Expressed another way, the isotacticity of the polypropylenes as measured by ¹³C NMR, and expressed as a pentad content, is greater than 93% or 95% or 97% in certain embodiments.

The polypropylene can vary widely in composition. For example, substantially isotactic polypropylene homopolymer or propylene copolymer containing equal to or less than 10 wt% of other monomer, that is, at least 90 wt% by weight propylene can be used. Further, the polypropylene can be present in the form of a graft or block copolymer, in which the blocks of polypropylene have substantially the same stereoregularity as the propylene-α-olefin copolymer (described below) so long as the graft or block copolymer has a sharp melting point above 110°C or 115°C or 130°C, characteristic of the stereoregular propylene sequences.

The polypropylene can be a combination of homopolypropylene, and/or random, and/or block copolymers as described herein. When the polypropylene is a random copolymer, the percentage of the α-olefin derived units in the copolymer is, in general, up to 5% by weight of the polypropylene, 0.5% to 5% by weight in another embodiment, and 1% to 4% by weight in yet another embodiment. The preferred comonomer derived from ethylene or α-olefins containing 4 to 12 carbon atoms. One, two or more comonomers can be copolymerized with propylene. Exemplary α-olefins may be selected from the group consisting of ethylene; 1-butene; 1-pentene-2-methyl-1-pentene-3-methyl-1-butene; 1-hexene-3-methyl-1-pentene-4-methyl-1-pentene-3,3-dimethyl-1-butene; 1-heptene; 1-hexene; 1-methyl-1-hexene; dimethyl-1-pentene; trimethyl-1-butene; ethyl-1-pentene; 1-octene; methyl-1-pentene; dimethyl-1-hexene; trimethyl-1-pentene; ethyl-1-hexene; 1-methylethyl-1-pentene; 1-diethyl-1-butene; propyl-1-pentene; 1-decene; methyl-1-nonene; 1-nonene; dimethyl-1-octene; trimethyl-1-heptene; ethyl-1-octene; methylethyl-1-butene; diethyl-1-hexene; 1-dodecene and 1-hexadodecene.

The weight average molecular weight (Mw) of the polypropylene can be between 50,000 g/mol to 3,000,000 g/mol, or from 90,000 g/mol to 500,000 g/mol in another embodiment, with a molecular weight distribution (MWD, Mw/Mn) within the range from 1.5 to 2.5; or 3.0 to 4.0; or 5.0 to 20.0. The polypropylene can have an MFR (2.16kg/ 230°C) ranging of from 10 dg/min to 15 dg/min; or 18 dg/min to 30 dg/min; or 35 dg/min to 45 dg/min; or 40 dg/min to 50 dg/min.

The term "random polypropylene" ("RCP") as used herein broadly means a single phase copolymer of propylene having up to 9 wt%, preferably 2 to 8 wt% of an alpha olefin comonomer. Preferred alpha olefin comonomers have 2 carbon atoms, or from 4 to 12 carbon atoms. Preferably, the alpha olefin comonomer is ethylene.

The propylene impact copolymers ("ICP") is heterogeneous and can include a first phase of 70 to 95 wt% homopolypropylene and a second phase of from 5 to 30 wt% ethylene-propylene rubber, based on the total weight of the impact copolymer. The propylene impact copolymer can include 78 to 95 wt% homopolypropylene and from 5 to 22 wt% ethylene-propylene rubber, based on the total weight of the impact copolymer. In certain embodiments, the propylene-based polymer can include from 90 to 95 wt% homopolypropylene and from 5 to 10 wt% ethylene-propylene rubber, based on the total weight of the impact copolymer.

There is no particular limitation on the method for preparing the polypropylenes described herein. However, for example, the polymer is a propylene homopolymer obtained by homopolymerization of propylene in a single stage or multiple stage reactor. Copolymers may be obtained by copolymerizing propylene and ethylene or an α-olefin having from 4 to 20 carbon atoms in a single stage or multiple stage reactor. Polymerization methods include, but are not limited to, high pressure, slurry, gas, bulk, or solution phase, or a combination thereof, using any suitable catalyst such as traditional Ziegler-Natta catalyst or a single-site, metallocene catalyst system, or combinations thereof including bimetallic (i.e., Ziegler-Natta and metallocene) supported catalyst systems.

Exemplary commercial polypropylenes include the family of Achieve™ polymers (ExxonMobil Chemical Company, Baytown, TX). The Achieve polymers are produced using metallocene catalyst systems. In certain embodiments, the metallocene catalyst system produces a narrow molecular weight distribution polymer. The MWD is typically in the range of 1.5 to 2.5. However, a broader MWD polymer may be produced in a process with multiple reactors. Different MW polymers can be produced in each reactor to broaden the MWD. Achieve polymer such as Achieve 3854, a homopolymer having an MFR of 24 dg/min can be used as a blend component described herein. Alternatively, an Achieve polymer such as Achieve 6936G1, a 1550 dg/min MFR homopolymer, can be used as a blend component described herein. Other polypropylene random copolymer and impact copolymer may also be used. The choice of polypropylene MFR can be used as means of adjusting the final MFR of the blend, especially the facing layer composition. Any of the polypropylenes described herein can be modified by controlled rheology to improve spinning performance as is known in the art.

The "propylene-α-olefin copolymer" is a copolymer of propylene-derived units and one or more units derived from ethylene or a C₄-C₁₀ α-olefin and optionally one or more diene-derived units, and are relatively elastic and/or form nonwoven fibers and fabrics that are elastic (Ultimate Elongation from greater than 500%). The overall comonomer content of the copolymer is within the range from 5 to 35 wt% in one embodiment. In some embodiments, where more than one comonomer is present, the amount of a particular comonomer may be less than 5 wt%, but the combined comonomer content is from greater than 5 wt%. The propylene-α-olefin copolymers may be described by any number of different parameters, and those parameters may include a numerical range made up of any desirable upper limit with any desirable lower limit as described herein for the propylene-α-olefin copolymers.

The propylene-α-olefin copolymer may be a terpolymer of propylene, block copolymer (the comonomer-derived units occur along long sequences), impact copolymer of propylene, random polypropylene, random copolymer (the comonomer-derived units are randomly distributed along the polymer backbone), or mixtures thereof. The presence of randomness or "blocky-ness" in a copolymer can be determined by ¹³C NMR as is known in the art and described in, for example, 18 J. Poly. Sci.: Poly. Lett. Ed.(1980), pp. 389-394.

In certain embodiments, the propylene-α-olefin copolymer can include ethylene or C₄-C₁₀ α-olefin-derived units (or "comonomer-derived units") within the range from 5 or 7 or 8 or 10 to 18 or 20 or 25 or 32 or 35 wt% by weight of the copolymer. The propylene-α-olefin copolymer may also include two different comonomer-derived units. Also, these copolymers and terpolymers may include diene-derived units as described below. In a particular embodiment, the propylene-α-olefin copolymer includes propylene-derived units and comonomer units selected from ethylene, 1-butene, 1-hexene, and 1-octene. And in a more particular embodiment, the comonomer is ethylene, and thus the propylene-α-olefin copolymer is a propylene-ethylene copolymer.

In one embodiment, the propylene-α-olefin copolymer includes from less than 10 or 8 or 5 or 3 wt%, by weight of the copolymer, of diene derived units (or "diene"), and within the range from 0.1 or 0.5 or 1 to 5 or 8 or 10 wt% in yet another embodiment. Suitable dienes include for example: 1,4-hexadiene, 1,6-octadiene, 5-methyl-1,4-hexadiene, 3,7-dimethyl-1,6-octadiene, dicyclopentadiene (DCPD), ethylidiene norbornene (ENB), norbornadiene, 5-vinyl-2-norbornene (VNB), and combinations thereof. The diene, if present, is most preferably ENB.

In certain embodiments, the propylene-α-olefin copolymers have a triad tacticity of three propylene units, as measured by ¹³C NMR, from greater than 75% or 80% or 82% or 85% or 90%. In one embodiment, the triad tacticity is within the range from 50 to 99 %, and from 60 to 99% in another embodiment, and from 75 to 99% in yet another embodiment, and from 80 to 99% in yet another embodiment; and from 60 to 97% in yet another embodiment. Triad tacticity is determined as follows: The tacticity index, expressed herein as "m/r", is determined by ¹³C NMR. The tacticity index m/r is calculated as defined by Cheng, H. N., "13C NMR Analysis of Ethylene-Propylene Rubbers", Macromolecules, Vol. 17 (1984), pp. 1950-1955. The designation "m" or "r" describes the stereochemistry of pairs of contiguous propylene groups, "m" referring to meso and "r" to racemic. An m/r ratio of 1.0 generally describes a syndiotactic polymer, and an m/r ratio of 2.0 an atactic material. An isotactic material theoretically may have a ratio approaching infinity, and many by-product atactic polymers have sufficient isotactic content to result in ratios from greater than 50. Embodiments of the propylene-α-olefin copolymer have a tacticity index m/r within the range from 4 or 6 to 8 or 10 or 12.

In certain embodiments, the propylene-α-olefin copolymers have a heat of fusion (H_{f}), determined according to the Differential Scanning Calorimetry (DSC) procedure described herein, within the range from 0.5 or 1 or 5 J/g, to 35 or 40 or 50 or 65 or 75 J/g. In certain embodiments, the H_{f} value is from less than 75 or 65 or 55 J/g.

In certain embodiments, the propylene-α-olefin copolymers have a percent crystallinity within the range from 0.5 to 40%, and from 1 to 30% in another embodiment, and from 5 to 25% in yet another embodiment, wherein "percent crystallinity" is determined according to the DSC procedure described herein. (The thermal energy for the highest order of polypropylene is estimated at 189 J/g (i.e., 100% crystallinity is equal to 189 J/g)). In another embodiment, the propylene-α-olefin copolymer has a percent crystallinity from less than 40% or 25% or 22% or 20%.

In certain embodiments, the propylene-α-olefin copolymers have a single peak melting transition as determined by DSC; in certain embodiments the propylene-α-olefin copolymer has a primary peak melting transition from less than 90°C, with a broad end-of-melt transition from greater than about 110°C. The peak "melting point" (Tₘ) is defined as the temperature of the greatest heat absorption within the range of melting of the sample. However, the propylene-α-olefin copolymer may show secondary melting peaks adjacent to the principal peak, and/or the end-of-melt transition, but for purposes herein, such secondary melting peaks are considered together as a single melting point, with the highest of these peaks being considered the Tₘ of the propylene-α-olefin copolymer. The propylene-α-olefin copolymers have a peak melting temperature (Tₘ) from less than 70 or 80 or 90 or 100 or 105°C in certain embodiments; and within the range from 10 or 15 or 20 or 25 to 65 or 75 or 80 or 95 or 105°C in other embodiments.

The procedure for DSC determinations is as follows. About 0.5 grams of polymer is weighed out and pressed to a thickness of about 15-20 mils (about 381-508 microns) at about 140°C -150°C, using a "DSC mold" and Mylar™ as a backing sheet. The pressed pad is allowed to cool to ambient temperature by hanging in air (the Mylar was not removed). The pressed pad is annealed at room temperature (about 23-25°C) for about 8 days. At the end of this period, an about 15-20 mg disc is removed from the pressed pad using a punch die and placed in a 10 microliter aluminum sample pan. The sample is placed in a differential scanning calorimeter (Perkin Elmer Pyris 1 Thermal Analysis System) and cooled to about - 100°C. The sample is heated at about 10°C/min to attain a final temperature of about 165°C. The thermal output, recorded as the area under the melting peak of the sample, is a measure of the heat of fusion and can be expressed in Joules per gram (J/g) of polymer and automatically calculated by the Perkin Elmer System. Under these conditions, the melting profile shows two (2) maxima, the maxima at the highest temperature was taken as the melting point within the range of melting of the sample relative to a baseline measurement for the increasing heat capacity of the polymer as a function of temperature.

In certain embodiments, the propylene-α-olefin copolymers have a density within the range from 0.840 g/cm³to 0.920 g/cm³, and from 0.845 g/cm³to 0.900 g/cm³ in another embodiment, and from 0.850 g/cm³to 0.890 g/cm³ in yet another embodiment, the values measured at room temperature per the ASTM D-1505 test method.

In certain embodiments, the propylene-α-olefin copolymers have a Shore A hardness (ASTM D2240) within the range from 10 or 20 to 80 or 90 Shore A. In yet another embodiment, the propylene-α-olefin copolymers possess an Ultimate Elongation (ASTM-D412) greater than 500%, 1,000% or 2,000%. The propylene-α-olefin copolymers can also have an Ultimate Elongation (ASTM-D412) ranging from a low of about 300%, 400%, or 500% to a high of about 800%, 1,200%, 1,800%, 2,000%, or 3,000%.

In certain embodiments, the propylene-α-olefin copolymers have a weight average molecular weight (Mw) value within the range from 20,000 to 5,000,000 g/mole, and from 50,000 to 1,000,000 g/mole in another embodiment, and from 70,000 to 400,000 g/mole in yet another embodiment. In another embodiment, the propylene-α-olefin copolymers have a number average molecular weight (Mn) value within the range from 4,500 to 2,500,000 g/mole, and from 20,000 to 250,000 g/mole in yet another embodiment, and from 50,000 to 200,000 g/mole in yet another embodiment. In yet another embodiment, the propylene-α-olefin copolymers have a z-average molecular weight (Mz) value within the range from 20,000 to 7,000,000 g/mole, and from 100,000 to 700,000 g/mole in another embodiment, and from 140,000 to 500,000 g/mole in yet another embodiment.

In certain embodiments, a desirable molecular weight (and hence, a desirable MFR) is achieved by visbreaking the propylene-α-olefin copolymers. The "visbroken propylene-α-olefin copolymers" (also known in the art as "controlled rheology" or "CR") is a copolymer that has been treated with a visbreaking agent such that the agent breaks apart the polymer chains. Non-limiting examples of visbreaking agents include peroxides, hydroxylamine esters, and other oxidizing and free-radical generating agents. Stated another way, the visbroken copolymer may be the reaction product of a visbreaking agent and the copolymer. In particular, a visbroken propylene-α-olefin copolymer is one that has been treated with a visbreaking agent such that its MFR is increased, in one embodiment by at least 10%, and at least 20% in another embodiment relative to the MFR value prior to treatment.

In certain embodiments, the molecular weight distribution (MWD) of the propylene-α-olefin copolymers is within the range from 1.5 or 1.8 or 2.0 to 3.0 or 3.5 or 4.0 or 5.0 or 10.0 in particular embodiments. Techniques for determining the molecular weight (Mn, Mz and Mw) and molecular weight distribution (MWD) are as follows, and as by Ver Strate et al., "Near Monodisperse Ethylene-Propylene Copolymers by Direct Ziegler-Natta Polymerization. Preparation, Characterization, Properties," Vol. 21, Macromolecules (1988), pp. 3360-3371. Conditions described herein govern over published test conditions. Molecular weight and molecular weight distribution are measured using a Waters 150 gel permeation chromatograph equipped with a Chromatix KMX-6 on-line light scattering photometer. The system was used at 135°C with 1,2,4-trichlorobenzene as the mobile phase. Showdex™ (Showa-Denko America, Inc.) polystyrene gel columns 802, 803, 804 and 805 are used. This technique is discussed in Rooney, J. G. et al., "On Line Determination by Light Scattering of Mechanical Degradation in the GPC Process," Liquid Chromatography of Polymers and Related Materials III, J. Cazes ed., Marcel Dekker (1981), pp. 207-235. No corrections for column spreading were employed; however, data on generally accepted standards, for example, National Bureau of Standards, Polyethylene (SRM 1484) and anionically produced hydrogenated polyisoprenes (an alternating ethylene-propylene copolymer) demonstrate that such corrections on Mw/Mn or Mz/Mw are less than 0.05 units. Mw/Mn was calculated from an elution time-molecular weight relationship whereas Mz/Mw was evaluated using the light scattering photometer. The numerical analyses can be performed using the commercially available computer software GPC2, MOLWT2 available from LDC/Milton Roy-Riviera Beach, Fla.

The propylene-α-olefin copolymers described herein can be produced using any catalyst and/or process known for producing polypropylenes. In certain embodiments, the propylene-α-olefin copolymers can include copolymers prepared according to the procedures in WO 02/36651, U.S. Patent No. 6,992,158, and/or WO 00/01745. Preferred methods for producing the propylene-α-olefin copolymers are found in U.S. Patent Application Publication No. 2004/0236042 and U.S. Patent No. 6,881,800. Preferred propylene-based polyolefin polymers are available commercially under the trade names VISTAMAXX™ (ExxonMobil Chemical Company, Houston, TX, USA) and VERSIFY™ (The Dow Chemical Company, Midland, Michigan, USA), certain grades of TAFMER™ XM or NOTIO™ (Mitsui Company, Japan), certain grades of LMPO™ from Idemitsu, or certain grades of SOFTELL™ (Lyondell Basell Polyolefine GmbH, Germany). A commercial example of an ethylene-based polyolefin block copolymer is INFUSE™ olefin block copolymers from Dow Chemical.

In one or more embodiments, the meltblown resin can be or include natural rubber (NR), synthetic polyisoprene (IR), butyl rubber (copolymer of isobutylene and isoprene, IIR), halogenated butyl rubbers (chloro-butyl rubber (CIIR); bromo-butyl rubber (BIIR)), polybutadiene (BR), styrene-butadiene rubber (SBR), SEBS block copolymers, SIS block copolymers, SBS block copolymers, ethylene-octene block copolymers, ethylene-octene copolymers, ethylene-hexene copolymers, ethylene-butene copolymers, nitrile rubber, hydrogenated nitrile rubbers, chloroprene rubber (CR), polychloroprene, neoprene, EPM (ethylene-propylene rubber) and EPDM rubbers (ethylene-propylene-diene rubber), epichlorohydrin rubber (ECO), polyacrylic rubber (ACM, ABR), silicone rubber, fluorosilicone rubber, fluoroelastomers, perfluoroelastomers, polyether block amides (PEBA), chlorosulfonated polyethylene (CSM), ethylene-vinyl acetate (EVA), thermoplastic elastomers (TPE), thermoplastic vulcanizates (TPV), thermoplastic polyurethane (TPU), thermoplastic olefins (TPO), polysulfide rubber, or blends of any two or more of these elastomers. In at least one specific embodiment, the elastic resin is or includes one or more polyolefin polymers. The term "polyolefin polymers" refers to homopolymers or copolymers of α-olefins having less than 40% crystallinity, or a heat of fusion (H_{f}) of less than 75 J/g.

In certain embodiments, the meltblown resin can be or include one or more metallocene polyethylenes ("mPE's"), including one or more mPE homopolymers or copolymers. The mPE homopolymers or copolymers may be produced using mono- or bis-cyclopentadienyl transition metal catalysts in combination with an activator of alumoxane and/or a non-coordinating anion in solution, slurry, high pressure or gas phase. The catalyst and activator may be supported or unsupported and the cyclopentadienyl rings may be substituted or unsubstituted. Several commercial products produced with such catalyst/activator combinations are commercially available from ExxonMobil Chemical Company in Baytown, Texas under the tradename EXACT™. For more information on the methods and catalysts/activators to produce such mPE homopolymers and copolymers see PCT Patent Application Publication No(s). WO 94/26816, WO 92/00333, WO 91/09882, WO 94/03506 and WO 94/03506; EP No(s). 0 277 003, 0 129 368, 0 520 732, 0 426 637, 0 573 403, 0 520 732, 0 495 375, 0 500 944, 0 570982 and 0 277004; U.S. Patent No(s). 5,153,157, 5,198,401, 5,240,894, 5,324,800, 5,264,405, 5,096,867, 5,507,475, 5,055,438 and 5,017,714; and Canadian Patent No. 1,268,753.

In certain embodiments, the meltblown resin can be or include one or more termonomers and tetramonomers which may be one or more C₃ to C₂₀ olefins, any C₄ to C₂₀ linear, cyclic or branched dienes or trienes and any styrenic monomers such as styrene, alphamethyl styrene, or para-methyl styrene. Preferred examples include butadiene, pentadiene, cyclopentadiene, hexadiene, cyclohexadiene, heptadiene, octadiene, nonadiene, norbornene, vinyl norbornene, ethylidene norbornene, isoprene and heptadiene.

The C₃ to C₂₀ and C₄ to C₂₀ olefins can be any polymerizable olefin monomer and are preferably a linear, branched or cyclic olefin, even more preferably an alpha-olefin. Examples of suitable olefins include propylene, butene, isobutylene, pentene, isopentene, cyclopentene, hexene, isohexene, cyclohexene, heptene, isoheptene, cycloheptene, octene, isooctene, cyclooctene, nonene, cyclononene, decene, isodecene, dodecene, isodecene, 4-methyl-pentene-1, 3-methyl-pentene-1, 3,5,5-trimethyl hexene-1. Suitable comonomers also include dienes, trienes, and styrenic monomers. Preferred examples include styrene, alphamethyl styrene, para-alkyl styrene (such as para-methyl styrene), hexadiene, norbornene, vinyl norbornene, ethylidene norbornene, butadiene, isoprene, heptadiene, octadiene, and cyclopentadiene. Preferred comonomers for the copolymer of ethylene are propylene, butene, hexene and/or octene.

In certain embodiments, the meltblown resin can include one or more polyalphaolefins (PAOs). PAOs are high purity hydrocarbons, with a fully paraffinic structure and a high degree of branching. Suitable PAOs are liquids with a pour point of - 10°C or less and a kinematic viscosity at 100°C (KV100°C) of 3 cSt or more. Such PAOs can include C₁₅ to C₁₅₀₀ (preferably C₂₀ to C₁₀₀₀, preferably C₃₀ to C₈₀₀, preferably C₃₅ to C₄₀₀, most preferably C₄₀ to C₂₅₀) oligomers (such as dimers, trimers). of C₃ to C₂₄ (preferably C₅ to C₁₈, preferably C₆ to C₁₄, preferably C₈ to C₁₂) alpha-olefins, preferably linear alpha-olefins (LAOs), provided that C₃ and C₄ alpha-olefins are present at 30 wt% or less (preferably 20 wt% or less, preferably 10 wt% or less, preferably 5 wt% or less). Suitable LAOs include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, and blends thereof.

In one or more embodiments, a single LAO is used to prepare the oligomers. A preferred embodiment involves the oligomerization of 1-octene or 1-decene, preferably 1-decene. In one or more embodiments, the PAO is or includes oligomers of two or more C₃ to C₁₈ LAOs, to make 'bipolymer' or 'terpolymer' or higher-order copolymer combinations, provided that C₃ and C₄ LAOs are present 30 wt% or less (preferably 20 wt% or less, preferably 10 wt% or less, preferably 5 wt% or less). A preferred embodiment involves oligomerization of a mixture of LAOs selected from C₆ to C₁₈ LAOs with even carbon numbers. Another preferred embodiment involves oligomerization of 1-octene, 1-decene, and 1-dodecene.

In one or more embodiments, the PAO comprises oligomers of a single alpha-olefin species having a carbon number of 5 to 24 (preferably 6 to 18, more preferably 8 to 12, most preferably 10). In one or more embodiments, the PAO comprises oligomers of mixed alpha-olefins (i.e., two or more alpha-olefin species), each alpha-olefin having a carbon number of 5 to 24 (preferably 6 to 18, preferably 8 to 12). In one or more embodiments, the PAO comprises oligomers of mixed alpha-olefins (i.e., involving two or more alpha-olefin species) where the weighted average carbon number for the alpha-olefin mixture is 6 to 14 (preferably 8 to 12, preferably 9 to 11).

In one or more embodiments, the PAO or blend of PAOs has a number-average molecular weight (Mₙ) of from 400 to 15,000 g/mol (preferably 400 to 12,000 g/mol, preferably 500 to 10,000 g/mol, preferably 600 to 8,000 g/mol, preferably 800 to 6,000 g/mol, preferably 1,000 to 5,000 g/mol). In one or more embodiments, the PAO or blend of PAOs has a Mₙ greater than 1,000 g/mol (preferably greater than 1,500 g/mol, preferably greater than 2,000 g/mol, preferably greater than 2,500 g/mol).

In one or more embodiments, the PAO or blend of PAOs has a KV100°C of 3 cSt or more (preferably 4 cSt or more, preferably 5 cSt or more, preferably 6 cSt or more, preferably 8 cSt or more, preferably 10 cSt or more, preferably 20 cSt or more, preferably 30 cSt or more, preferably 40 cSt or more, preferably 100 or more, preferably 150 cSt or more). In one or more embodiments, the PAO has a KV100°C of 3 to 3,000 cSt (preferably 4 to 1,000 cSt, preferably 6 to 300 cSt, preferably 8 to 150 cSt, preferably 8 to 100 cSt, preferably 8 to 40 cSt). In one or more embodiments, the PAO or blend of PAOs has a KV100°C of 10 to 1000 cSt (preferably 10 to 300 cSt, preferably 10 to 100 cSt). In yet another embodiment, the PAO or blend of PAOs has a KV100°C of 4 to 8 cSt. In yet another embodiment, the PAO or blend of PAOs has a KV100°C of 25 to 300 cSt (preferably 40 to 300 cSt, preferably 40 to 150 cSt). In one or more embodiments, the PAO or blend of PAOs has a KV100°C of 100 to 300 cSt.

In one or more embodiments, the PAO or blend of PAOs has a Viscosity Index (VI) of 120 or more (preferably 130 or more, preferably 140 or more, preferably 150 or more, preferably 170 or more, preferably 190 or more, preferably 200 or more, preferably 250 or more, preferably 300 or more). In one or more embodiments, the PAO or blend of PAOs has a VI of 120 to 350 (preferably 130 to 250).

In one or more embodiments, the PAO or blend of PAOs has a pour point of -10°C or less (preferably -20°C or less, preferably -25°C or less, preferably -30°C or less, preferably -35°C or less, preferably -40°C or less, preferably -50°C or less). In one or more embodiments, the PAO or blend of PAOs has a pour point of -15 to -70°C (preferably -25 to -60°C).

In one or more embodiments, the PAO or blend of PAOs has a glass transition temperature (Tg) of -40°C or less (preferably -50°C or less, preferably -60°C or less, preferably -70°C or less, preferably -80°C or less). In one or more embodiments, the PAO or blend of PAOs has a Tg of -50 to -120°C (preferably -60 to -100°C, preferably -70 to -90°C).

In one or more embodiments, the PAO or blend of PAOs has a flash point of 200°C or more (preferably 210°C or more, preferably 220°C or more, preferably 230°C or more), preferably between 240°C and 290°C. In one or more embodiments, the PAO or blend of PAOs has a specific gravity (15.6°C) of 0.86 or less (preferably 0.855 or less, preferably 0.85 or less, preferably 0.84 or less).

In one or more embodiments, the PAO or blend of PAOs has a molecular weight distribution (M_{w}/Mₙ) of 2 or more (preferably 2.5 or more, preferably 3 or more, preferably 4 or more, preferably 5 or more, preferably 6 or more, preferably 8 or more, preferably 10 or more). In one or more embodiments, the PAO or blend of PAOs has a M_{w}/Mₙ of 5 or less (preferably 4 or less, preferably 3 or less) and a KV100°C of 10 cSt or more (preferably 20 cSt or more, preferably 40 cSt or more, preferably 60 cSt or more).

Desirable PAOs are commercially available as SpectraSyn™ and SpectraSyn Ultra™ from ExxonMobil Chemical (USA), some of which are summarized in Table A. Other useful PAOs include those available as Synfluid™ from ChevronPhillips Chemical (USA), as Durasyn™ from Innovene (USA), as Nexbase™ from Neste Oil (Finland), and as Synton™ from Chemtura (USA). For PAOs, the percentage of carbons in chain-type paraffinic structures (C_{P}) is close to 100% (typically greater than 98% or even 99%). Additional details are described in, for example, U.S. Patent No(s). 3,149,178; 4,827,064; 4,827,073; 5,171,908; and 5,783,531 and in Synthetic Lubricants and High-Performance Functional Fluids (Leslie R. Rudnick & Ronald L. Shubkin, eds. Marcel Dekker, Inc. 1999), pp. 3-52.

### Additives

Any of the resins or layers can further include one or more additives. Suitable additives can include any one or more processing oils (aromatic, paraffinic and napthathenic mineral oils), compatibilizers, calcined clay, kaolin clay, nanoclay, talc, silicates, carbonates, sulfates, carbon black, sand, glass beads, mineral aggregates, wollastonite, mica, glass fiber, other filler, pigments, colorants, dyes, carbon black, filler, dispersants, flame retardants, antioxidants, conductive particles, UV-inhibitors, stabilizers, light stabilizer, light absorber, coupling agents including silanes and titanates, plasticizers, lubricants, blocking agents, antiblocking agents, antistatic agents, waxes, foaming agents, nucleating agents, slip agents, acid scavengers, lubricants, adjuvants, surfactants, crystallization aids, polymeric additives, defoamers, preservatives, thickeners, rheology modifiers, humectants, coagents, vulcanizing/cross-linking/curative agents, vulcanizing/cross-linking/curative accelerators, cure retarders and combinations thereof.

### Process for making composite

The multilayer composite or fabric can be formed using any melt blowing process. Preferably, the multilayer composite is meltblown from an apparatus that can operate at a melt pressure from greater than 500 psi (3.45 MPa) and a melt temperature within the range of 100°C to 350°C and capable of making fibers as fine as 1 micron in average diameter.

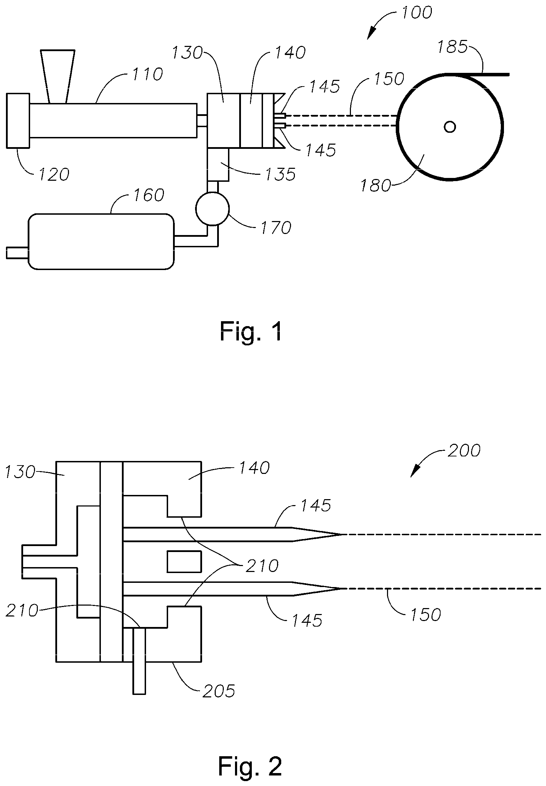

Figure 1 depicts a schematic view of an illustrative meltblowing system or arrangement 100 for making the multilayer meltblown composite, according to one or more embodiments. The system 100 includes at least one extruder 110, and may include a motor 120 to maintain melt pressure within the system 100. The extruder 110 can be coupled to at least one die block or array die 130 that is coupled to a spinneret portion or spinneret 140. The die block 130 is also coupled to at least one air manifold 135 for delivering high pressure air to the spinneret portion 140 of the die block 130. The spinneret 140 includes a plurality of spinning nozzles 145 through which the melt is extruded and simultaneously attenuated with air pressure to form filaments, or fibers 150. The spinning nozzles 145 are preferably circular, die capillaries. Preferably, the spinneret 140 has a nozzle density that ranges from 20, 30, or 40 holes/inch to 200, 250, or 320 holes/inch. In one embodiment, each nozzle 145 has an inside diameter ranging of from about 0.05 mm, 0.10 mm, or 0.20 mm to 0.80 mm, 0.90 mm, or 1.00 mm.

In the die spinneret 140, the molten threads or filaments converge with a hot, high velocity, gas stream (e.g., air or nitrogen) to attenuate the filaments of molten thermoplastic material to form the individual fibers 150. The temperature and flow rate of the attenuating gas stream can be controlled using a heat exchanger 160 and air valve 170. The diameters of the filaments can be reduced by the gas stream to a desired size. Thereafter, the meltblown fibers 150 are carried by the high velocity gas stream and are deposited on a collecting surface 180 to form at least one web 185 of randomly disbursed meltblown fibers. The collecting surface 180 can be an exterior surface of a vacuum drum, for example.

Figure 2 depicts an enlarged schematic view of an illustrative die assembly 200, according to one or more embodiments. The die assembly 200 includes the die block 130 and the spinneret 140. As depicted, the air ("primary air") is provided through the primary air nozzle 210 located at least on a side of the die spinneret 140. The die block 130 can be heated using the primary air, a resistive heating element, or other known device or technique (not shown), to prevent the die block 130 from becoming clogged with solidifying polymer as the molten polymer exits and cools. The air also draws, or attenuates, the melt into fibers. Secondary, or quenching, air at temperatures above ambient can also be provided through the die block 130. Primary air flow rates typically range from about 1 to 30 standard cubic feet per minute per inch of die width (SCFM/inch). In certain embodiments, the primary air pressure in the meltblown process typically ranges from a low of about 2 psig, 3, psig, 5 psig, or 7 psig to about 10 psig, 15 psig, 20 psig, or 30 psig at a point in the die block 130 just prior to exit. Primary air temperatures are typically within the range from 150°C, 200°C, or 230°C to 300°C, 320°C, or 350°C.

The melting temperature (Tm) of the resins can range from 50°C to 300°C. In yet other embodiments, the melting temperature is at least 50°C and less than 150°C, 200°C, 220°C, 230°C, 250°C, 260°C, 270°C, 280°C, 290°C, 300°C, 310°C, or 320°C. The resin can be formed into fibers at a melt pressure from greater than 500 psi (3.4 MPa) or 750 psi (5.2 MPa) or 1,000 psi (6.9 MPa) or 2,000 psi (17.3 MPa), or within the range from 500 psi (3.5 MPa) or 750 psi (5.2 MPa) to 1,000 psi (6.9 MPa) or 2,000 psi (13.8 MPa) or 2,500 psi (17.3 MPa).

Expressed in terms of the amount of composition flowing per inch of the die per unit of time, throughputs for the manufacture of meltblown fabrics using the compositions described herein are typically within the range from 0.1, 0.2, 0.3, or 0.5 to 1.0, 1.5, 2.0, or 3.0 grams per hole per minute (ghm). Thus, for a die having 30 holes per inch, polymer throughput is typically about 0.25, 0.5, or 1.0 to about 4, 8, or 12 lbs/inch/hour (PIH).

Because such high temperatures can be used, a substantial amount of heat is desirably removed from the fibers in order to quench, or solidify, the fibers leaving the nozzles. Although not shown, cold gases of air or nitrogen can be used to accelerate cooling and solidification of the meltblown fibers. In particular, cooling ("secondary") air flowing in a cross-flow direction (perpendicular or angled) relative to the direction of fiber elongation may be used to quench meltblown fibers. Also, an additional, cooler pressurized quench air may be used and can result in even faster cooling and solidification of the fibers. In certain embodiments, the secondary cold air flow may be used to attenuate the fibers. Through the control of air and array die temperatures, air pressure, and polymer feed rate, the diameter of the fiber formed during the meltblown process may be regulated.

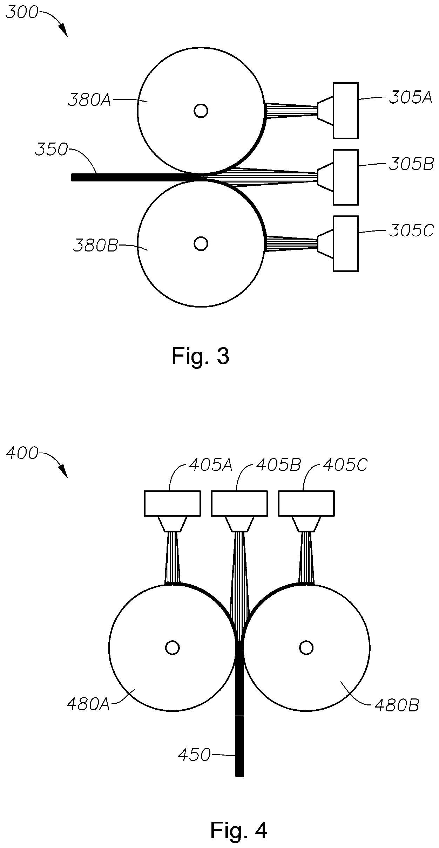

Figures 3 through 8 depict schematics of various illustrative meltblowing systems or arrangements that can be used to make the multi-layered composites described herein. Figure 3, for example, depicts a schematic of an illustrative meltblowing system 300 for making a multilayer meltblown composite 350. The meltblowing system 300 can include three or more vertically arranged dies 305A, 305B, 305C. Each die 305A, 305B, 305C can be similar to the die 200 discussed and described above with reference to Figure 2. Any resin or combination of resins can be blown through any given die 305A, 305B, 305C, where the first die 305A provides a first facing or first outer layer, the second die 305B provides a core layer or intermediate layer, and the third die 305C provides a second facing layer or second outer layer.

The meltblowing system 300 can further include two or more collection surfaces 380A, 380B that are vertically aligned. Each collection surface 380A, 380B can be similar to the collection drum 180 depicted and described above with reference to Figure 1. The collection surfaces 380A, 380B can be adjacent one another such that a desired gap ("nip") is defined therebetween. As depicted, fibers from each die 305A, 305B, 305C are horizontally directed toward and collected on the collection surfaces 380A and/or 380B to form a three layer fabric composite 350. The dies 305A, 305B, 305C can be independently movable with respect to one another. The dies 305A, 305B, 305C can also be independently movable with respect to the collection surfaces 380A, 380B to vary the die to collector distance ("DCD").

Figure 4 depicts a schematic of another illustrative meltblowing system 400 for making a multilayer meltblown composite 450, according to one or more embodiments. The meltblowing system 400 can include three or more horizontally arranged dies 405A, 405B, 405C and horizontally aligned collection surfaces 480A, 480B. Each die 405A, 405B, 405C can be similar to the die 200 discussed and described above with reference to Figure 2. Each collection surface 480A, 480B can be similar to the collection drum 180, as depicted and described above with reference to Figure 1. The dies 405A, 405B, 405C can be independently movable with respect to one another. The dies 405A, 405B, 405C can also be independently movable with respect to the collection surfaces 480A, 480B to vary the DCD.

Any resin or combination of resins can be vertically extruded through any given die 405A, 405B, 405C to provide a multi-layer composite having first and second facing layers disposed about a core layer, as described herein. As depicted, fibers from each die 405A, 405B, 405C are directed toward and collected on the collection surfaces 480A and/or 480B to form a three layer fabric composite 450.

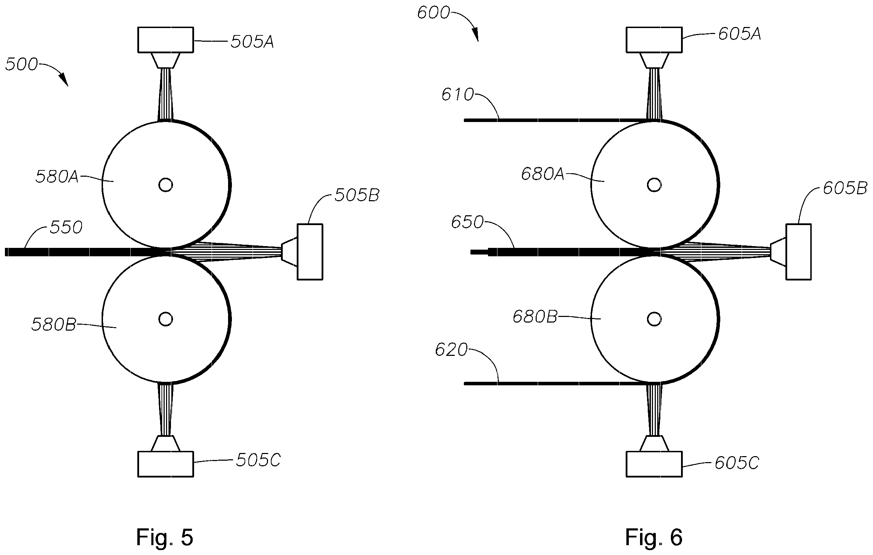

Figure 5 depicts a schematic of another illustrative meltblowing system 500 for making a multilayer meltblown composite 550, according to one or more embodiments. The meltblowing system 500 can include three or more dies 505A, 505B, 505C to provide a multi-layer composite having first and second facing layers disposed about a core layer, as described herein. Each die 505A, 505B, 505C can be similar to the die 200 discussed and described above with reference to Figure 2. The meltblowing system 500 can further include two or more collection surfaces 580A, 580B that are vertically aligned. Each collection surface 580A, 580B can be similar to the collection drum 180, as depicted and described above with reference to Figure 1.

The first die 505A and the third die 505C can be vertically aligned with respect to one another and located on opposing sides of the collection surfaces 580A, 580B. The second die 505B can be located intermediate the first and third dies 505A, 505C or provide a three layer fabric composite 550.

Any resin or combination of resins can be extruded through any given die 505A, 505B, 505C to provide the multi-layer composite 550. The dies 505A, 505B, 505C can be independently movable with respect to one another. The dies 505A, 505B, 505C can also be independently movable with respect to the collection surfaces 580A, 580B to vary the DCD.

Figure 6 depicts a schematic of yet another illustrative meltblowing system 600 for making a multilayer meltblown composite 650, according to one or more embodiments. The meltblowing system 600 can include three or more dies 605A, 605B, 605C. Each die 605A, 605B, 605C can be similar to the die 200 discussed and described above with reference to Figure 2. The meltblowing system 600 can further include two or more collection surfaces 680A, 680B that are vertically aligned. Each collection surface can be similar to the collection drum 180, as depicted and described above with reference to Figure 1. Like the embodiment of Figure 5, the first die 605A and the third die 605C can be vertically aligned with respect to one another and located on opposing sides of the collection surfaces 680A, 680B while the second die 605B can be located intermediate the first and third dies 605A, 605C.

A first facing layer 610 can be introduced to the meltblowing system 600 via the first collection surface 680A. A second facing layer 620 can also be introduced to the meltblowing system 600 via the second collection surface 680B. As shown, the collection surfaces 680A, 680B provide facing layers 610, 620, respectively, on which the fibers blown from the dies 605A, 605B, 605C, respectively, are collected. Accordingly, the resulting multilayer composite has at least five layers.

Any resin or combination of resins can be extruded through any given die 605A, 605B, 605C. The dies 605A, 605B, 605C can be independently movable with respect to one another. The dies 605A, 605B, 605C can also be independently movable with respect to the collection surfaces 180A, 180B and/or the facing layers 610, 620 disposed on the collection surfaces 180A, 180B.

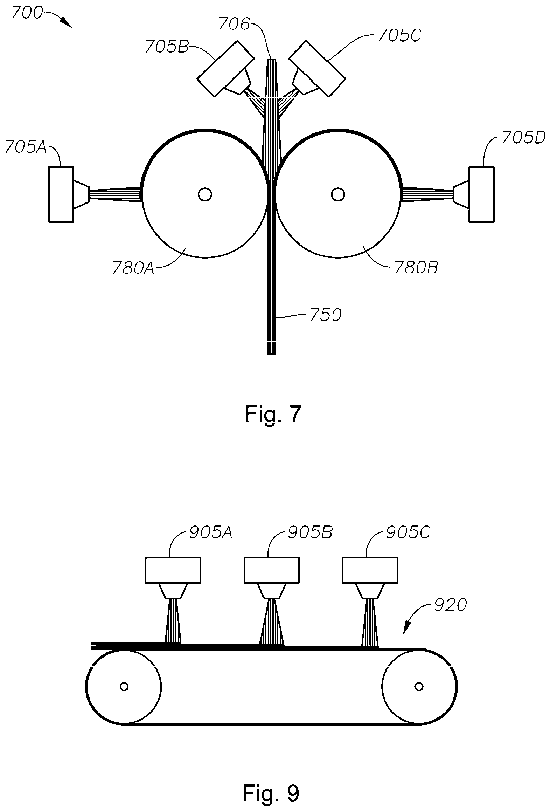

Figure 7 depicts a schematic of still another illustrative meltblowing system 700, according to one or more embodiments. The meltblowing system 700 can include four or more dies 705A, 705B, 705C, 705D. Each die 705A, 705B, 705C, 705D can be similar to the die 200 discussed and described above with reference to Figure 2. The meltblowing system 700 can further include two or more collection surfaces 780A, 780B that are horizontally aligned. Each collection surface 780A, 780B can be similar to the collection drum 180, as depicted and described above with reference to Figure 1.

At least two dies, such as die 705A and die 705D, can be horizontally aligned with respect to one another and located on opposing sides of the collection surfaces 780A, 780B. And at least two dies, such as die 705B and die 705C, can be located intermediate the dies 705A, 705D. The dies 705A, 705B, 705C, 705D can be independently movable with respect to one another. The dies 705A, 705B, 705C, 705D can also be independently movable with respect to the collection surfaces 180A, 180B to vary the DCD.

Any resin or combination of resins can be extruded through any given die 705A, 705B, 705C, 705D to provide the multi-layer composite 750. As depicted, fibers from each die 705A, 705B, 705C, 705D are directed toward and collected on the collection surfaces 780A, 780B to form a three layer fabric composite 750. The middle or intermediate layer, i.e. "core" layer, can include a mixture of fibers produced from dies 705B, 705C. An additional layer of resin or one or more additives can be sprayed or otherwise introduced through nozzle 706 located between dies 705B and 705C.

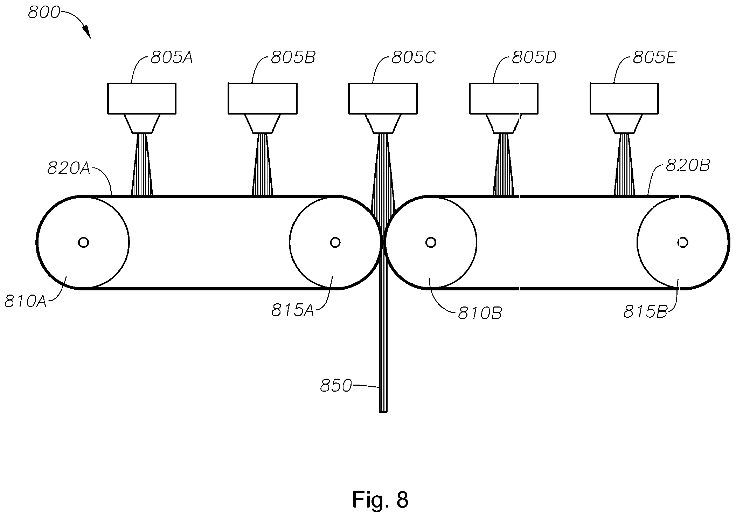

Figure 8 depicts a schematic of yet another illustrative meltblowing system 800, according to one or more embodiments. The meltblowing system 800 can include five or more dies 805A, 805B, 805C, 805D, 805E. Each die 805A, 805B, 805C, 805D, 805E can be similar to the die 200 discussed and described above with reference to Figure 2. The meltblowing system 800 can further include two or more horizontally arranged collection surfaces 820A, 820B. As depicted, a first collection surface 820A can be a conveyor belt disposed about and moved by two horizontally aligned drums 810A and 815A. Similarly, a second collection surface 820B can be a conveyor belt disposed about and moved by two horizontally aligned drums 810B, 815B. The collection surfaces 820A, 820B can be adjacent one another such that a desired gap ("nip") is defined therebetween.

Each die 805A, 805B, 805C, 805D, 805E can be horizontally aligned above the collection surfaces 820A, 820B or aligned in other spatial orientation. The dies 805A, 805B, 805C, 805D, 805E can be independently movable with respect to one another. The dies 805A, 805B, 805C, 805D, 805E can also be independently movable with respect to the collection surfaces 820A, 820B.

The collection surfaces 820A, 820B can provide a collection surface for fibers produced from the dies 805A, 805B, 805C, 805D, 805E. Any resin or combination of resins can be extruded through any given die 805A, 805B, 805C, 805D, 805E. As depicted, fibers from each die 805A, 805B, 805C, 805D, 805E are directed toward and collected on the collection surfaces 820A and/or 820B to form a five layer fabric composite 850.

Figure 9 depicts a schematic of still yet another illustrative meltblowing system 900 for making a multilayer meltblown composite, according to one or more embodiments described. As depicted, a single collection surface 920 can be used, and the dies 905A, 905B, 905C can be arranged anywhere about the collection surfaces.

Referring to any system or arrangement described above 100, 200, 300, 400, 500, 600, 700, 800, or 900 with regard to Figures 1 through 9 or elsewhere herein, the laminate may be passed through the nip between the unheated or heated smooth collection surface(s), or unheated or heated patterned collection surface(s), or a combination of two or more of these, while applying light pressure thereon, as another extensible construction is contacted with the laminate to form a multilayer construction. Given the formation of the multilayer constructions as described herein, in certain embodiments, adhesives are substantially absent from the constructions, meaning that adhesives are not used to secure the layers of fabric and/or film to one another. As used herein, an "adhesive" is a substance that is used to secure two layers of film or fabric to one another as is known in the art. Examples of adhesive substances include polyolefins, polyvinyl acetate polyamides, hydrocarbon resins, waxes, natural asphalts, styrenic rubbers, and blends thereof. Also, in each configuration 300, 400, 500, 600, 700, and 800 described, the innermost layer ("core layer") can be blown symmetrically with respect to the nip of the collection surface(s), as depicted in Figures 3-8, and although not shown, the innermost layer ("core layer") in each configuration 300, 400, 500, 600, 700, and 800 described can be blown asymmetrically with respect to the nip of the collection surface(s).

In one or more embodiments above or elsewhere herein, the meltblown fibers may be continuous or discontinuous and are generally within the range from 0.5 to 250 microns in average diameter, preferably less than 200 microns, less than 150 microns, less than 100 microns, less than 75 microns, less than 50 microns, less than 40 microns, less than 30 microns, less than 20 microns, less than 10 microns, less than 5 microns, less than 4 microns, less than 3 microns, less than 2 microns, or less than 1 microns. In certain embodiments, the meltblown fibers can have a diameter within the range of from 5 or 6 or 8 or 10 to 20 or 50 or 80 or 100 or 150 or 200 or 250 µm in average diameter, and in other embodiments have a diameter from less than 80 or 50 or 40 or 30 or 20 or 10 or 5 µm.

In one or more embodiments above or elsewhere herein, the fiber diameters of each layer of the multi-layered composite can be the same or different. Accordingly, a ratio of fiber diameters of adjacent layers can be the same or vary. For example, a ratio of fibers diameters of adjacent layers can range from a low of about 0.1:1 to a high of about 1:200. Such ratios can also range from about 1:150; 1:100; 1:75; 1:50; 1:25; 1:10; 1:5; or 1:2.

In one or more embodiments above or elsewhere herein, at least 1% of the fibers in any given layer of the multi-layered structure can be co-joined or married. More preferably, at least 2%, 5%, 10 %, 15%, 20%, or 25% of the fibers in any given layer of the multi-layered structure can be co-joined or married. The amount of co-joined or married fibers can also range from a low of about 1%, 5%, or 10% to a high of about 25%, 35%, or 45%.

In one or more embodiments above or elsewhere herein, the fibers of any one or more layers of the multi-layered structure can exhibit or possess some extent of fusion, melting, entrainment or mechanical interlocking with the fibers of any one or more adjoining layers without a sharp delineated interface between layers.

In one or more embodiments above or elsewhere herein, at least one layer of the multi-layered structure can recover at least 80% of it original length after 100% extension and at least 70% of it original length after 200% extension. In one or more embodiments, the multi-layered structure can recover at least 80% of it original length after 100% extension and at least 70% of it original length after 200% extension.

In one or more embodiments above or elsewhere herein, the force at 50% extension of at least one layer of the multi- layered structure, upon elongating the sample to 100% of its original length and then upon unloading, is about 1.3x10⁻³ lbf/in/gsm.

In one or more embodiments above or elsewhere herein, the multi-layered structure has a hydrohead of about 0.05 mbar/gsm or more. Preferably, the hydrohead is greater than 0.1 mbar/gsm, 0.2 mbar/gsm, 0.3 mbar/gsm, 0.4 mbar/gsm, or 0.5 mbar/gsm. The hydrohead can also range from a low of about 0.1 mbar/gsm, 0.2 mbar/gsm or 0.3 mbar/gsm to a high of about 0.7 mbar/gsm, 0.8 mbar/gsm, or 0.9 mbar/gsm.

In one or more embodiments above or elsewhere herein, the air permeability of any one or more layers of the multi-layered structure is about 0.02 cm³/cm²/s or more. In one or more embodiments, the air permeability of the multi-layered structure is about 0.02 cm³/cm²/s or more. The air permeability can also range from a low of about 0.02 cm³/cm²/s, 0.05 cm³/cm²/s, or 1.0 cm³/cm²/s to a high of about 2.0 cm³/cm²/s, 3.0 cm³/cm²/s or 5.0 cm³/cm²/s.

In one or more embodiments above or elsewhere herein, the fabrics may have a basis weight within the range of from 10 or 20 or 30 to 50 or 80 or 100 or 150 g/m². These fabrics may also be characterized by having an Ultimate Elongation from greater than 200% or 300% or 500% or 1,000%. In this manner, multilayer constructions can be formed having at least three melt-blown layers ("MMM"). Other multi-layered meltblown structures are contemplated such as MₓQ, QMₓQ, Mₓ, QMₓ, QₓS, MₓA_{y}M_{y}, QMₓA_{y}M_{y}Q, QMₓQM_{y}S, QMₓQM_{y}, MₓQM_{y}Q, QQMₓQ, where x is at least 3 and y is 0 to 100. For example, x can be 3 to 100; 3 to 50; 3 to 25; or 3 to 10; x can also range from a low of about 3, 4, or 5 to a high of about 6, 10, or 15; x can also range from a low of about 1, 2, 3, 4, or 5 to a high of about 6, 7, 8, 10, or 15. "M" represents a layer of meltblown fabric (where each "M" in a construction may be the same or different); "Q" represents a spunbond, spunlace, woven fabric, or film (where each "S" in a construction may be the same or different), and "A" represents one or more additives. When such adhering of the meltblown fibers to another fabric is desired, the secondary cooling air flow may be diminished and/or heated to maintain some of the melt quality and hence bonding ability of the forming elastic meltblown fibers to the fabrics upon which they are bonded.

The multilayer construction can also include an "*in situ* laminate" or "ISL", which is a meltspun laminate comprising two or more layers of meltspun fabrics, wherein layers that are adjacent to one another are *in situ* entangled with one another to define an interfacial region of mixed fibers between the layers. "*In situ* entangled" means that the fibers of adjacent layers engage one another at least along one edge of adjacent fabric layers as by wrapping around each other and/or one passing at least once through a fiber from an adjacent layer. The fabric layers that make up the meltspun ISLs may be the same or different, meaning that they may have the same or different chemical and/or physical characteristics. In certain embodiments, the various layers are characterized in that (a) the basis weight of the fabrics is not the same, (b) the average diameter of the fibers making up the fabrics is not the same, (c) the composition of the fabrics is not the same, (d) number density of fibers per unit area in adjacent fabrics is not the same, (e) the cross-sectional shape of the fibers is not the same, (f) the individual fiber structure is not the same (bicomponent versus mono-component), or (g) any combination of one or more of these differences. The layers that make up the meltspun ISLs may also be characterized by being entangled to a degree that prevents the layers from being easily pulled apart. In certain embodiments, the adjacent layers have a Peel Strength of greater than 10 or 20 or 30 or 40 or 50 grams, or in other embodiments within the range from 1 or 2 or 5 or 10 to 50 or 60 or 80 or 100 or 120 or 150 or 200 grams. Peel Strength referred to herein were determined essentially in accordance with ASTM D2724.13. The procedure was intended to determine the z-direction strength (bond strength) of laminated fabrics. The efficiency of bonding between component layers of a fabric was determined by measuring the force required to delaminate the fabric. Delamination is defined as the separation of the plies of a laminated fabric due to a failure of the bonding mechanism. Peel strength is the tensile force required to separate the component layers of a textile under specified conditions. In this procedure, the plies of a six inch by two inch specimen (six inches in the machine direction) were manually separated for a distance of about two inches along the length of the specimen. One layer was then clamped into each jaw of a tensile testing machine with a gauge length of one inch and the maximum force (i.e., peak load) needed to completely separate the component layers of the fabric was determined.

The ISL may also comprise a composite material made of a mixture of two or more different fibers or a mixture of fibers and particulates. Such mixtures may be formed by adding fibers and/or particulates to the gas stream in which meltspun fibers are carried so that an intimate entangled commingling of meltspun filaments and fibers and other materials, for example, wood pulp, staple fibers and particulates such as, for example, hydrocolloid (hydrogel) particulates commonly referred to as superabsorbent materials, occurs prior to collection of the meltblown fibers upon a collecting device to form a coherent web of randomly dispersed meltblown fibers and other materials such as disclosed in US 4,100,324. If the nonwoven web is a nonwoven web of fibers, the fibers may be joined by interfiber bonding to form a coherent web structure. Interfiber bonding may be produced by thermal bonding in a spunbonding process, or entanglement between individual meltblown fibers. The fiber entangling is produced by the meltspinning process but may be generated or increased by processes such as, for example, hydraulic entangling or needlepunching. Alternatively and/or additionally a bonding agent may be used to increase the desired bonding. In certain desired embodiments, neither of these methods are used to increase entanglement. Further details concerning ISLs and methods of their making can be found in U.S. Application No. 12/566,410.

In forming a multilayered construction, the polyolefin polymers may be meltblown onto an extensible fabric, such as a spunlace fabric, that is passed underneath or in front of the forming meltblown fabric. The melt temperature and distance between the spinnerets and the passing extensible fabric is adjusted such that the fibers are still in a melt or partial melt state when contacting the fabric(s) to form a two or three layer construction. The coated fabric(s) then has the melted or partially-melted elastic meltblown fibers/fabric adhered thereto.

The multilayered construction can then be mechanically stretched to tailor the elastic performance of the composite. Not wishing to be bound by theory, it is believed that initial stretching modifies the structure of the elastomeric components in the composite, and potentially the interfacial bonding among fibers between and/or within layers. An initial stretching can reduce the hysteresis loop, which is a measure of the energy absorbed by the elastomer during deformation. An ideal elastomer has no hysteresis, or put another way, all the energy put into the elastomer, or stored in the elastomers, is given back upon returning the elastomer to its original size and shape. There are few elastomers and even fewer elastic laminates that show ideal elastic behavior. Most if not all show some level of hysteresis. An initial loading and unloading cycle will typically reduce the hysteresis loop which means that the material or laminate is a more efficient elastomer. The mechanical stretching of elastomers and elastomeric composites can have other advantageous effects, such as reducing the peak load at deformation, potentially improved permanent set, retractive force, and adjusting the aesthetics of the outer layers/surfaces.

There are many different methods for mechanically stretching a composite in both machine direction (MD) and cross-direction (CD). Devices based upon intermeshing blades or disks are effective at incrementally stretching fabrics in either MD or CD, respectively, or both when units are placed in series. The term incremental stretching arises from the fact the fabrics are stretched in an incremental fashion across their entire width or length. The increment or distance over which the fabric is stretched is determined by the spacing of adjacent disks or blades and the distance of interpenetration between the two sets of disks or blades. Examples of this and similar technology using grooved rolls rather than separate disks can be found in U.S. Patent No(s). 4,223,059, 4,251,585, 4,285,100, and 4,368,565. Further improvements to this basic technology allowing narrower webs/films to be efficiently stretched, or to increase the amount of stretching or vary the amount of stretch across a web can be found in U.S. Patent No(s). 5,143,679, 5,156,793, and 5,167,897.

Other technologies are available for stretching webs that are better suited for MD stretching. An example of using nip rolls for this purpose is described in U.S. Patent No. 7,320,948 in which sets of two nip rolls running at different speeds enable fabrics and laminates to be stretched in MD.

### Fiber

The fiber can be a single component fiber. The fiber can also be a multi-component fiber formed from a process wherein at least two polymers are extruded from separate extruders and melt-blown or spun together to form one fiber. In one or more embodiments, the polymers used in the multi-component fiber are the same or substantially the same. In one or more embodiments, the polymers used in the multi-component fiber are different from each other. The configuration of the multi-component fiber can be, for example, a sheath/core arrangement, a side-by-side arrangement, a pie arrangement, an islands-in-the-sea arrangement, or a variation thereof. The fiber can also be drawn to enhance mechanical properties via orientation, and subsequently annealed at elevated temperatures, but below the crystalline melting point to reduce shrinkage and improve dimensional stability at elevated temperature.

In certain embodiments, where a separate fabric or layer is unwound into the process, such as Figure 6 for example, and is for example used as a facing layer for the laminate, these fabrics can be continuous fibers such as found in spunbonded fabrics, staple fibers, or discontinuous fibers, such as those found in carded fabrics. The length and diameter of the staple fibers can vary depending on the desired toughness and stiffness of the fiber reinforced composition. In one or more embodiments, the fibers have a length of 1/4 inch, or a length within the range having a lower limit of 1/8 inch (0.3175 cm), or 1/6 inch (0.423 cm), and an upper limit of 1 inch (2.54 cm), or 1.5 inch (3.81 cm) or 5 inch (12.70 cm). In one or more embodiments, the diameter of the fibers is within the range having a lower limit of 0.1 microns and an upper limit of 100 microns. The diameters can also range from a low of 0.1 microns, 0.5 microns, or 1.0 microns to a high of about 5 microns, 10 microns or 15 microns. Suitable ranges also include 0.1 to 8 microns; 0.2 to 7 microns; 0.3 to 6 microns, 0.1 to 5 microns; and 0.1 to 3 microns.

In certain embodiments, the mechanical properties of the meltblown fabrics (or multilayer constructions) described herein can be enhanced by a stretching or orientation process. Annealing can be combined with mechanical orientation, in either or both the CD or the MD. If desired, mechanical orientation can be done by the temporary, forced extension of the fabric for a short period of time before it is allowed to relax in the absence of the extensional forces. In the meltblowing process, there may be some degree of orientation of the fibers in the MD imparted due to the laydown or spinning process alone. But in certain embodiments, no additional mechanical orientation or stretching is needed. Thus, in certain embodiments, the meltblown fabrics described herein have a low degree of, or no, orientation. In other embodiments, orientation is imparted in the CD but not the MD. Thus, in certain embodiments the meltblown fabric possesses an MD Elongation less than 20 or 50 or 80 or 100% and a CD Elongation greater than 100 or 200 or 300%. Stated another way, the meltblown fabric possesses a CD/MD elongation at break ratio of between 0.1 or 0.5 and 2 or 3 or 5 or 7 or 10.

In one embodiment, the formation of the elastic fibers and fabrics includes an annealing step with or without mechanical orientation. Annealing may also be done after fabrication of the fabric from the elastic fibers. In certain embodiments, the elastic meltblown fiber or fabric is annealed at a temperature within the range from 50°C or 60°C to 130°C or 160°C. Thermal annealing of the fabric is conducted by maintaining the fabric at a temperature within the range above for a period from 1 second to 1 minute, preferably between 1 and 10 seconds. The annealing time and temperature can be adjusted for any particular copolymer or copolymer composition. In another embodiment, the meltblown fabrics can be annealed in a single-step by a heated roll during calendaring under low tension. In other embodiments, the meltblown fabrics require little to no post fabrication processing.

In certain embodiments, the forming multilayer construction is further processed by passing the multilayer construction through a hydroentangling apparatus, thus further bonding the web of elastic fibers to each other or other adjacent fabric layers by interlocking and entangling the fibers about each other with high velocity streams of water. Hydroentangling is known in the art and described in some detail by A.M. Seyam et al., "An Examination of the Hydroentangling Process Variables," in INT'L NONWOVENS J. 25-33 (Spring 2005).

As mentioned above, the fibers can be continuous (long fibers) or discontinuous (short fibers). Long fibers will have a length to diameter aspect ratio greater than 60, preferably 200 to 500; and the short fibers will have a length to diameter aspect ratio less than 60, preferably 20 to 60. The number of fibers per square inch (fiber density) of the meltblown fabric preferably ranges from a low of 20 fibers/in², 40 fibers/in², or 50 fibers/in² to a high of 100 fibers/in², 250 fibers/in², or 500 fibers/in². Suitable ranges also include: 25 fibers/in² to 400 fibers/in²; 50 fibers/in² to 300 fibers/in²; 60 fibers/in² to 200 fibers/in²; 20 fibers/in² to 80 fibers/in²; and 30 fibers/in² to 70 fibers/in².

In certain embodiments, the multilayer construction can be processed to form constraints. The constraints can take the form of "inelastic zones" (or "deadzones") in the multilayer construction that aid in its processing to form a final article such as a diaper or adult incontinence garment. At least one portion of the layers are fused to one another in discrete zones that are parallel to the CD of the biaxially elastic laminate, parallel to the MD of the biaxially elastic laminate, or at some orientation there between. The inelastic zones may have dimensions such that its length is continuous or discontinuous from one edge of the fabric to the other, and has a width of, for example, at least 1 or 2 or 3 or 5 or 10 mm. The inelastic zones may take any shape.

In certain embodiments, one or more, or all, of the layers of the constrained multilayer laminate are not adhered to one another but are merely adjacent to one another. In other embodiments, at least two layers, or all the layers, of the constrained multilayer laminate are adhered to one another. A "constraining means" is any device, substance or process that is capable of fusing at least a portion of one layer to another layer to create at least one inelastic zone. The process of "fusing" creates an area on the constrained multilayer laminate that is no longer "elastic," and may comprise fusing one adjacent layer to the elastic layer(s), or substantially (at least 90%) fusing all of the layers, up to the fusing of all layers throughout the full thickness (all layers) of the constrained multilayer laminate. In certain embodiments, fusing discrete zones creates zones that possess an elasticity that is at least 40% or 50% or 60% or 70% or 80% or 90% or 98% less elastic relative to the initial elasticity of the meltspun elastic fabric.

Fusing may be achieved by any means such as by heating the layers to form an adherence between at least two layers, or hydroentangling at least two of the layers, or ultrasonic means, electronic means, or other suitable means for adhering the layers to one another. It can be performed by any suitable means such as by calendering, adhesives, sonic energy, microwave energy or other electromagnetic energy, or other processes known in the art. Adhesives may be used in fusing, but in certain embodiments, the application of adhesives is absent from the fusing step. Examples of adhesives include those comprising low weight average molecular weight (<80,000 g/mole) polyolefins, polyvinyl acetate polyamide, hydrocarbon resins, natural asphalts, styrenic rubbers, polyisoprene and blends thereof.

By referring to the "inelastic zone" created by the fusing step as "inelastic," what is meant is that its elasticity is less than that defined above for a material that is "elastic." The inelastic zone may take on any "discrete" shape or form suitable to the desired end use, such as a diaper or adult incontinence garment. For example, the inelastic zones may take the form of a long line or block having a length that is at least twice or three times its width. In some embodiments the inelastic zone defines an area of irregular shape, or non-linear shape such as a circle, arc or shapes comprising such features.

In a specific embodiment the fusing comprises calendering the biaxially elastic nonwoven laminate to melt at least a portion of the meltspun elastic fabric and create an fusion of the one or more elastic fabrics to at least one extensible fabric. In a particular embodiment, the fusing step is carried out by means of a calender with raised heated zoning patterns. In certain embodiments, the fusing further introduces an embossed pattern in the laminate. The fusing and embossing step may be carried out by means of a calender with intermeshing rolls that are optionally heated. Also, the fusing and embossing step may be carried out by means of patterned intermeshing vacuum drums running under a vacuum differential, or other suitable means.

In certain embodiments, the fusing is performed such that a degree of elasticity is maintained in the CD of the constrained multilayer laminate, the MD of the constrained multilayer laminate, or some degree there between and/or combination thereof. For example, the fusing may be such that the constrained multilayer laminate is only elastic in the CD direction, or 45° from the CD direction, or 20° from the CD direction, or in the range of from 90° to 20° or 45°. Also, the elasticity in the constrained multilayer laminate may be such that both CD and MD elasticity is reduced but not complete removed. In a specific embodiment, at least one portion of the bound fabric layers are fused in discrete zones that are parallel to the CD of the biaxially elastic laminate, parallel to the MD of the biaxially elastic laminate, or at some orientation there between.

In certain embodiments the laminate has a CD width and an inelastic zone running perpendicular to the CD of the laminate, the inelastic zone having a CD width of at least 2 or 5 or 10 or 20 % of the CD width of the laminate. In yet other embodiments the laminate has a CD width and an inelastic zone running perpendicular to the MD of the laminate, the inelastic zone having a MD width of at least 2 or 5 or 10 or 20 % of the CD width of the laminate. Further disclosure on constrained laminates and methods of constraining them is found in U.S. Application No. 12/566,434.

### Specific Layer Blends

In one or more preferred embodiments, at least one layer of the multilayer composite includes at least one propylene-based or ethylene-based homopolymers or random, block, or graft copolymers comprising none (i.e. homopolymers) or from 0.1 wt% or 1 wt% or 2 wt% or 5 wt% to 10 wt% or 15 wt% or 20 wt% or 45 wt%, by weight of the polymer, of comonomer-derived units selected from ethylene and C₄-C₁₀ α-olefins (propylene-based polymers) and C₃-C₁₀ α-olefins (ethylene-based polymers). Preferably, at least one layer of the multilayer composite includes one or more polypropylenes within the range of from about 50 wt% to 99 wt%; or 60 wt% to 95 wt%; or 50 wt% to 90 wt%; or 55 wt% to 85 wt%, by weight of the fabric layer/composition. In one or more embodiments, at least one layer of the multilayer composite consists essentially of one or more polypropylenes.

In one or more embodiments, the core layer includes a blend of at least one propylene-α-olefin copolymer resin and at least one polypropylene resin. For example, a preferred blend includes 50 wt% of one or more propylene-α-olefin copolymer resins and 50 wt% of one or more polypropylene resins. The amount of the propylene-α-olefin copolymer resin in the blend can range from a low of about 20 wt%, 30 wt%, or 40 wt% to a high of about 60 wt%, 70 wt%, or 90 wt%. The amount of the polypropylene resin in the blend can range from a low of about 1 wt%, 5 wt%, or 10 wt% to a high of about 20 wt%, 30 wt%, or 45 wt%.

In one or more preferred embodiments, at least one facing layer includes a blend of polypropylene and less than 50 wt% of one or more blend components. The blend component can be one or more impact copolymers, one or more random copolymers (RCP), one or more polyethylenes, one or more polyethylenes having a Mw of less than 20,000 g/mol, one or more polypropylenes having a Mw of less than 20,000 g/mol, one or more polyalphaolefins, or any combination(s) thereof. The amount of the blend component (not the polypropylene) can be present in an amount ranging from a low of about 0.5 wt%, 1 wt%, or 5 wt% to a high of about 30 wt%, 40 wt%, or 50 wt%. For example, the amount of the blend component can be of from about 1 wt% to 49 wt%; or about 5 wt% to 45 wt%; or about 5 wt% to 40 wt%; or about 5 wt% to 25 wt%.

The MFR (ASTM D1238, 230°C, 2.16 kg) of the facing layer resin or blend is preferably less than 2,000 dg/min (g/10 min), more preferably 1,500 dg/min or less, 1,200 dg/min or less, 900 dg/min or less, 600 dg/min or less, 300 dg/min or less, 200 dg/min or less, 150 dg/min or less, 100 dg/min or less, or 90 dg/min or less. In certain embodiments, the MFR of the extensible resin or blend can range from a low of about 50 dg/min, 75 dg/min, or 80 dg/min to a high of about 250 dg/min, 500 dg/min, or 1,000 dg/min. The MFR of the facing layer resin or blend can also range from a low of about 20 dg/min, 30 dg/min, or 40 dg/min to a high of about 90 dg/min, 120 dg/min, or 150 dg/min. The MFR of the facing layer resin or blend can also range from a low of about 20 dg/min, 35 dg/min, or 45 dg/min to a high of about 65 dg/min, 80 dg/min, or 95 dg/min. The MFR of the facing layer resin or blend can further range from a low of about 0.1 dg/min, 0.5 dg/min, 1 dg/min, or 5 dg/min to a high of about 30 dg/min, 40 dg/min, 70 dg/min, or 90 dg/min.

The weight average molecular weight (Mw) of the facing layer resin or blend is preferably less than 500,000; 400,000; 300,000; or 250,000. For example, the Mw of the facing layer resin or blend can range from about 50,000 to about 200,000. In one or more embodiments, the Mw of the facing layer resin or blend can range from a low of about 50,000, 80,000, or 100,000 to a high of about 155,000, 170,000, or 190,000. In one or more embodiments, the Mw of the facing layer resin or blend can range from about 80,000 to about 200,000; 100,000 to about 175,000; or 140,000 to about 180,000.

The MFR (ASTM D1238, 230°C, 2.16 kg) of the core layer resin or blend is preferably less than 2,000 dg/min (g/10 min), more preferably 1,500 dg/min or less, 1,200 dg/min or less, 900 dg/min or less, 600 dg/min or less, 300 dg/min or less, 200 dg/min or less, 150 dg/min or less, 100 dg/min or less, or 90 dg/min or less. In certain embodiments, the MFR of the core layer resin or blend can range from a low of about 50 dg/min, 75 dg/min, or 80 dg/min to a high of about 250 dg/min, 500 dg/min, or 1,000 dg/min. The MFR of the core layer resin or blend can also range from a low of about 20 dg/min, 30 dg/min, or 40 dg/min to a high of about 90 dg/min, 120 dg/min, or 150 dg/min. The MFR of the core layer resin or blend can also range from a low of about 25 dg/min, 35 dg/min, or 45 dg/min to a high of about 75 dg/min, 85 dg/min, or 95 dg/min. The MFR of the core layer resin or blend can further range from a low of about 0.1 dg/min, 0.5 dg/min, 1 dg/min, or 5 dg/min to a high of about 30 dg/min, 40 dg/min, 70 dg/min, or 90 dg/min. In at least one specific embodiment, the MFR of the core layer resin or blend ranges from about 2 dg/min to about 90 dg/min; about 2 dg/min to about 20 dg/min; about 3 dg/min to about 90 dg/min; or about 3 dg/min to about 20 dg/min.

The weight average molecular weight (Mw) of the core layer resin or blend is preferably less than 500,000; 400,000; 300,000; or 250,000. For example, the Mw of the core layer resin or blend can range from about 50,000 to about 290,000. In one or more embodiments, the Mw of the core layer resin or blend can range from a low of about 50,000, 65,000, or 80,000 to a high of about 130,000, 190,000, or 290,000. In one or more embodiments, the Mw of the core layer resin or blend can range from about 80,000 to about 285,000; 80,000 to about 240,000; or 80,000 to about 140,000.

One method of characterizing multilayer construct elasticity is to determine a hysteresis curve according to the following cyclic testing procedure. Generally, a sample of nonwoven fabric is stretched one or more times using an Instron 1130 instrument, which is commercially available from Instron Corporation. Unless stated otherwise, the test parameters used herein to generate hysteresis curves are: sample width = 1 inch, sample length = 3 inches, gauge length, i.e., distance between clamps, is 1 inch, crosshead speed, i.e., speed of top clamp that is applying a stretching force, is 10 in/min. As used herein "first cycle" and "second cycle" refer to the number of times an individual sample has been stretched.

Samples are tested by first cutting a nonwoven fabric sample to the specified sample size. Each test sample is loaded in to an Instron 1130 instrument by first attaching the sample to the crosshead/top clamp and then to the bottom clamp. The distance between the clamps is the specified gauge length. No pre tension is applied on the sample.

The sample is then stretched to the desired strain, e.g., 100%, or 200%, as measured by sample length, using a crosshead speed, i.e., stretch speed, of 10 in/min. The sample is then returned to zero load at the same crosshead speed without any hold time. The force on the sample as a function of strain during extension and retraction is recorded.

The sample is removed from the instrument for further characterization or stretched one or more times if additional cycles data was desired, e.g., second cycle data. Second cycle hysteresis curves are prepared by remounting samples already tested in a first cycle. Samples are mounted using the same gauge length unless specifically reported otherwise. The same procedure described above for the first cycle is utilized for the second cycle.

Unless described otherwise herein, permanent set is the amount of strain remaining in a sample after retraction from a specified strain expressed as a percentage of the specified strain. The elongation remaining in the sample at zero load after retraction (as determined by the intercept of the retraction curve with the x-axis) is divided by the maximum elongation the sample was stretched during that cycle.

Unless described otherwise herein, retractive force at 50% is the force exerted by a sample after stretching to a given elongation and allowing the sample to retract to one-half of that elongation.

Unless described otherwise herein, peak load (lbs/in) is the maximum load in pounds force exerted on the sample during extension divided by the width of the sample in inches.

Unless described otherwise herein, peak force MD (N) is the maxium force exerted on a sample during extension in the machine direction (MD) expressed in Newtons.

Unless described otherwise herein, peak force CD (N) is the maximum force exerted on a sample during extension in the cross direction (CD) expressed in Newtons.

Unless described otherwise herein, elongation at break MD (%) is the increase in length of a sample measured at the breaking point after extension in the machine direction divided by the original gauge length expressed as a percentage.

Unless described otherwise herein, elongation at break CD (%) is the increase in length of a sample measured at its breaking point after stretching in the cross direction divided by the original gauge length expressed as a percentage.

### Articles

The multilayer constructions are particularly useful for applications requiring any one or more of the following properties or attributes: absorbency, liquid repellency, resilience, stretch, softness, strength, flame retardancy, washability, cushioning, filtering, bacterial barrier, and sterility. Illustrative applications and uses can include, but are not limited to, hygiene, medical, filters, and geotextiles, among others.

For example, the multilayer constructions can be used to make baby diapers, feminine hygiene napkins, adult incontinence products, personal hygiene wipes, bandages, wound dressings, air filters, liquid filters, household wipes, shop towels, battery separators, vacuum cleaner bags, cosmetic pads, food packaging, clothing, apparels, medical garments, and disposable underwear. Particularly suitable uses include closure systems on baby diapers, pull-ups, training pants, adult incontinence briefs and diapers, bandages, and other single use or disposable items.

Common filtering uses include gasoline, oil and air filters; water, coffee and tea bags; liquid cartridge and bag filters; vacuum bags; and allergen membranes. Illustrative geotextiles and uses thereof include soil stabilizers and roadway underlayment, foundation stabilizers, erosion control, canals construction, drainage systems, geomembranes protection, frost protection, agriculture mulch, pond and canal water barriers, and sand infiltration barrier for drainage tile.

Additional articles and uses of the multilayer construction provided herein can include, for example, carpet backing, marine sail laminates, table cover laminates, chopped strand mat, backing/stabilizer for machine embroidery, packaging, insulation, pillows, cushions, and upholstery padding, batting in quilts or comforters, consumer and mailing envelopes, tarps, as well as tenting and transportation (lumber, steel) wrapping.

The entire article can be formed from the multiplayer constructions, or the multilayer constructions can form individual sections or portions thereof. For example, in baby diapers, it is envisaged that the multilayer constructions form at least part of the back sheet, wings, and/or tabs.

Other embodiments can further include:
1. A method for forming a multilayer meltblown composite, comprising:
   meltblowing a first material to form a first meltblown layer;
   meltblowing a second material to form a second meltblown layer; and
   meltblowing a third material to form a third meltblown layer, wherein each material is the same or different, each material includes at least one resin having a MFR of about 2,000 dg/min or less, as measured by ASTM D1238, 2.16 kg, 230°C, and at least one of the first, second, and third materials comprises an elastomer having a recovery of at least 70% after 100% deformation, as determined by ASTM D412.
2. The method according to paragraph 1, wherein each meltblown layer has a basis weight within the range of from 5 g/m² to 300 g/m².
3. The method according to paragraph 1 or 2, wherein each meltblown layer has a basis weight within the range of from 10 g/m² to 150 g/m².
4. The method according to any of paragraphs 1 to 3, wherein the first meltblown layer has a basis weight within the range of from 5 g/m² to 300 g/m²; the second meltblown layer has a basis weight within the range of from 15 g/m² to 150 g/m²; and the third meltblown layer has a basis weight within the range of from 5 g/m² to 300 g/m².
5. The method according to any of paragraphs 1 to 4, wherein the elastomer is a propylene-α-olefin copolymer having a heat of fusion of 75 J/g or less.
6. The method according to any of paragraphs 1 to 5, wherein the second meltblown layer comprises at least 5 wt% of the propylene-α-olefin copolymer having a heat of fusion of 75 J/g or less.
7. The method according to any of paragraphs 1 to 6, wherein the second meltblown layer comprises at least 10 wt% of the propylene-α-olefin copolymer having a heat of fusion of 75 J/g or less.
8. The method according to any of paragraphs 1 to 7, further comprising mechanically stretching the multilayer composite in the machine direction (MD), cross direction (CD) or both MD and CD directions.
9. The method according to any of paragraphs 1 to 8, wherein the melt temperature of the second meltblown layer is about 325°C or less.
10. The method according to any of paragraphs 1 to 9, wherein the first and third meltblown layers comprise homopolypropylene, polypropylene, polyethylene, or blends thereof.
11. The method according to any of paragraphs 1 to 10, wherein each material has a MFR (ASTM D1238, 2.16 kg, 230°C) of less than 25 dg/min.
12. The method according to any of paragraphs 1 to 11, wherein each material has a MFR (ASTM D1238, 2.16 kg, 230°C) of less than 50 dg/min.
13. The method according to any of paragraphs 1 to 12, wherein the second meltblown layer is at least 10 wt% of the total weight of the multilayer composite.
14. The method according to any of paragraphs 1 to 13, wherein the second meltblown layer is disposed between the first and third meltblown layers.
15. The method according to any of paragraphs 1 to 14, wherein each material is meltblown onto a moving surface.
16. A multilayer meltblown composite, comprising:
   a first meltblown layer comprising one or more resins having an Ultimate Elongation (UE) of from 50% to 250%, as measured according to ASTM D412;
   a second meltblown layer comprising one or more resins having an Ultimate Elongation (UE) of 200% or more, as measured according to ASTM D412; and
   a third meltblown layer comprising one or more resins having an Ultimate Elongation (UE) of from 50% to 250%, as measured according to ASTM D412;
   wherein each resin has a MFR of about 2,000 dg/min or less, as measured by ASTM D1238, 2.16 kg, 230°C, and at least one of the first, second, and third meltblown layers comprises a propylene-α-olefin copolymer having a heat of fusion of 75 J/g or less.
17. The meltblown composite according to paragraph 16, wherein each meltblown layer has a basis weight within the range of from 5 g/m² to 300 g/m².
18. The meltblown composite according to paragraphs 16 or 17, wherein each meltblown layer has a basis weight within the range of from 10 g/m² to 150 g/m².
19. The meltblown composite according to any of paragraphs 16 to 18, wherein the first meltblown layer has a basis weight within the range of from 5 g/m² to 300 g/m²; the second meltblown layer has a basis weight within the range of from 15 g/m² to 150 g/m²; and the third meltblown layer has a basis weight within the range of from 5 g/m² to 300 g/m².
20. The meltblown composite according to any of paragraphs 16 to 19, wherein the second meltblown layer comprises at least 10 wt% of the propylene-α-olefin copolymer having a heat of fusion of 75 J/g or less.
21. The meltblown composite according to any of paragraphs 16 to 20, wherein the first and third meltblown layers each comprises at least 5 wt% of the propylene-α-olefin copolymer having a heat of fusion of 75 J/g or less.
22. The meltblown composite according to any of paragraphs 16 to 21, wherein the first and third meltblown layers each comprises at least 5 wt% of polypropylene.
23. The meltblown composite according to any of paragraphs 16 to 22, wherein the melt temperature of the second meltblown layer is about 325°C or less.
24. The meltblown composite according to any of paragraphs 16 to 23, wherein the first and third meltblown layers comprise homopolypropylene, polypropylene, polyethylene, or blends thereof.
25. The meltblown composite according to any of paragraphs 16 to 24, wherein each resin has a MFR (ASTM D1238, 2.16 kg, 230°C) of less than 25 dg/min.
26. The meltblown composite according to any of paragraphs 16 to 25, wherein each resin has a MFR (ASTM D1238, 2.16 kg, 230°C) of less than 50 dg/min.
27. The meltblown composite according to any of paragraphs 16 to 26, wherein the second meltblown layer is at least 10 wt% of the total weight of the multilayer composite.
28. The meltblown composite according to any of paragraphs 16 to 27, wherein the second meltblown layer is disposed between the first and third meltblown layers.
29. An article of manufacture, incorporating as one or more components, a multilayer meltblown composite having:
   a first meltblown layer comprising one or more resins having an Ultimate Elongation (UE) of from about 50% to about 250%, as measured according to ASTM D412;
   a second meltblown layer comprising one or more resins having an Ultimate Elongation (UE) of 200% or more, as measured according to ASTM D412; and
   a third meltblown layer comprising one or more resins having an Ultimate Elongation (UE) of from 50% to 250%, as measured according to ASTM D412,
   wherein each resin has a MFR of about 2,000 dg/min or less, as measured by ASTM D1238, 2.16 kg, 230°C, and at least one of the first, second, and third meltblown layers comprises a propylene-α-olefin copolymer having a heat of fusion of 75 J/g or less.
30. The article according to paragraph 29, wherein the article is a garment.
31. The article according to any of paragraphs 29 or 30, wherein the article is a baby or adult incontinence diaper, training pant or pull-up or femcare product.
32. The article according to any of paragraphs 29 to 31, wherein the article is a filter.

## Claims

1. A method for forming a multilayer meltblown composite, comprising:
meltblowing a first material to form a first meltblown layer;
meltblowing a second material to form a second meltblown layer; and
meltblowing a third material to form a third meltblown layer, wherein each material is the same or different, each material includes at least one resin having a MFR of about 2,000 dg/min or less, as measured by ASTM D1238, 2.16 kg, 230°C, and at least one of the first, second, and third materials comprises an elastomer having a recovery of at least 70% after 100% deformation, as determined by ASTM D412.

2. The method according to claim 1, wherein each meltblown layer has a basis weight within the range of from 5 g/m² to 300 g/m².

3. The method according to claim 1, wherein the first meltblown layer has a basis weight within the range of from 5 g/m² to 300 g/m²; the second meltblown layer has a basis weight within the range of from 15 g/m² to 150 g/m²; and the third meltblown layer has a basis weight within the range of from 5 g/m² to 300 g/m².

4. The method according to any of claims 1-3, wherein the second meltblown layer comprises at least 5 wt% of a propylene-α-olefin copolymer having a heat of fusion of 75 J/g or less (measured with DSC).

5. The method according to any of claims 1-4, further comprising mechanically stretching the multilayer composite in the machine direction (MD), cross direction (CD) or both MD and CD directions.

6. The method according to any of claims 1-5, wherein the melt temperature (measured with DSC) of the second meltblown layer is about 325°C or less.

7. The method according to any of claims 1-6, wherein the first and third meltblown layers comprise homopolypropylene, polypropylene, polyethylene, or blends thereof.

8. The method according to any of claims 1-7, wherein each material has a MFR (ASTM D1238, 2.16 kg, 230°C) of less than 50 dg/min.

9. The method according to any of claims 1-8, wherein the second meltblown layer is at least 10 wt% of the total weight of the multilayer composite.

10. The method according to any of claims 1-9, wherein the second meltblown layer is disposed between the first and third meltblown layers.

11. The method according to any of claims 1-10, wherein each material is meltblown onto a moving surface.

12. A multilayer meltblown composite, comprising:
a first meltblown layer comprising one or more resins having an Ultimate Elongation (UE) of from 50% to 250%, as measured according to ASTM D412;
a second meltblown layer comprising one or more resins having an Ultimate Elongation (UE) of 200% or more, as measured according to ASTM D412; and
a third meltblown layer comprising one or more resins having an Ultimate Elongation (UE) of from 50% to 250%, as measured according to ASTM D412;
wherein each resin has a MFR of about 2,000 dg/min or less, as measured by ASTM D1238, 2.16 kg, 230°C, and at least one of the first, second, and third meltblown layers comprises a propylene-α-olefin copolymer having a heat of fusion of 75 J/g or less.

13. The meltblown composite according to claim 12, wherein the melt temperature of the second meltblown layer is 325°C or less.

14. An article of manufacture, incorporating as one or more components, a multilayer meltblown composite having:
a first meltblown layer comprising one or more resins having an Ultimate Elongation (UE) of from 50% to 250%, as measured according to ASTM D412;
a second meltblown layer comprising one or more resins having an Ultimate Elongation (UE) of 200% or more, as measured according to ASTM D412; and
a third meltblown layer comprising one or more resins having an Ultimate Elongation (UE) of from 50% to 250%, as measured according to ASTM D412,
wherein each resin has a MFR of about 2,000 dg/min or less, as measured by ASTM D1238, 2.16 kg, 230°C, and at least one of the first, second, and third meltblown layers comprises a propylene-α-olefin copolymer having a heat of fusion of 75 J/g or less.

15. The article according to claim 14, wherein the article is a garment, baby or adult incontinence diaper, training pant or pull-up or femcare product.

## Patentansprüche

1. Verfahren zum Bilden eines mehrschichtigen schmelzgeblasenen Verbundwerkstoffs, bei dem
ein erstes Material schmelzgeblasen wird, um eine erste schmelzgeblasene Schicht zu bilden;
ein zweites Material schmelzgeblasen wird, um eine zweite schmelzgeblasene Schicht zu bilden; und
ein drittes Material schmelzgeblasen wird, um eine dritte schmelzgeblasene Schicht zu bilden, wobei jedes Material gleich oder verschieden ist, jedes Material mindestens ein Harz mit einem MFR von etwa 2000 dg/min oder weniger einschließt, gemessen gemäß ASTM D1238, 2,16 kg, 230°C, und mindestens eines der ersten, zweiten und dritten Materialien ein Elastomer mit einer Erholung von mindestens 70 % nach 100 % Verformung umfasst, bestimmt gemäß ASTM D412.

2. Verfahren nach Anspruch 1, bei dem jede schmelzgeblasene Schicht ein Flächengewicht im Bereich von 5 g/m² bis 300 g/m² aufweist.

3. Verfahren nach Anspruch 1, bei dem die erste schmelzgeblasene Schicht ein Flächengewicht im Bereich von 5 g/m² bis 300 g/m² aufweist; die zweite schmelzgeblasene Schicht ein Flächengewicht im Bereich von 15 g/m² bis 150 g/m² aufweist; und die dritte schmelzgeblasene Schicht ein Flächengewicht im Bereich von 5 g/m² bis 300 g/m² aufweist.

4. Verfahren nach einem der Ansprüche 1 bis 3, bei dem die zweite schmelzgeblasene Schicht mindestens 5 Gew.% eines Propylen-α-Ole-fin-Copolymers mit einer Schmelzwärme von 75 J/g oder weniger aufweist (gemessen mittels DSC).

5. Verfahren nach einem der Ansprüche 1 bis 4, bei dem ferner das mehrschichtige Verbundmaterial in der Maschinenrichtung (MD), der Querrichtung (CD) oder sowohl in der MD- als auch der CD-Richtung mechanisch gereckt wird.

6. Verfahren nach einem der Ansprüche 1 bis 5, bei dem die Schmelztemperatur (gemessen mittels DSC) der zweiten schmelzgeblasenen Schicht etwa 325°C oder weniger beträgt.

7. Verfahren nach einem der Ansprüche 1 bis 6, bei dem die erste und dritte schmelzgeblasene Schicht Homopolypropylen, Polypropylen, Polyethylen oder Gemische davon umfassen.

8. Verfahren nach einem der Ansprüche 1 bis 7, bei dem jedes Material einen MFR (ASTM D1238, 2,16 kg, 230°C) von weniger als 50 dg/min aufweist.

9. Verfahren nach einem der Ansprüche 1 bis 8, bei dem die zweite schmelzgeblasene Schicht mindestens 10 Gew.% des Gesamtgewichts des mehrschichtigen Verbundmaterials stellt.

10. Verfahren nach einem der Ansprüche 1 bis 9, bei dem die zweite schmelzgeblasene Schicht zwischen der ersten und der dritten schmelzgeblasenen Schicht angeordnet ist.

11. Verfahren nach einem der Ansprüche 1 bis 10, bei dem jedes Material auf eine sich bewegende Oberfläche schmelzgeblasen wird.

12. Mehrschichtiges schmelzgeblasenes Verbundmaterial, welches eine erste schmelzgeblasene Schicht, die ein oder mehrere Harze mit einer Bruchdehnung (Ultimate Elongation; UE) von 50 % bis 250 % umfasst, gemessen gemäß ASTM D412;
eine zweite schmelzgeblasene Schicht, die ein oder mehrere Harze mit einer Bruchdehnung (UE) von 200 % oder mehr umfasst, gemessen gemäß ASTM D412; und
eine dritte schmelzgeblasene Schicht umfasst, die ein oder mehrere Harze mit einer Bruchdehnung (UE) von 50 % bis 250 % umfasst, gemessen gemäß ASTM D412;
wobei jedes Harz einen MFR von etwa 2000 dg/min oder weniger aufweist, gemessen gemäß ASTM D1238, 2,16 kg, 230°C, und mindestens eine von der ersten, zweiten und dritten schmelzgeblasenen Schicht ein Propylen-α-Olefin-Copolymer mit einer Schmelzwärme von 75 J/g oder weniger umfasst.

13. Schmelzgeblasener Verbundwerkstoff nach Anspruch 12, bei dem die Schmelztemperatur der zweiten schmelzgeblasenen Schicht 325°C oder weniger beträgt.

14. Fertigungsgegenstand, der als eine oder mehrere Komponenten einen mehrschichtigen schmelzgeblasenen Verbundwerkstoff beinhaltet, mit
einer ersten schmelzgeblasenen Schicht, die ein oder mehrere Harze mit einer Bruchdehnung (UE) von 50 % bis 250 % umfasst, gemessen gemäß ASTM D412;
einer zweiten schmelzgeblasenen Schicht, die ein oder mehrere Harze mit einer Bruchdehnung (UE) von 200 % oder mehr umfasst, gemessen gemäß ASTM D412; und
einer dritten schmelzgeblasenen Schicht, die ein oder mehrere Harze mit einer Bruchdehnung (UE) von 50 % bis 250 % umfasst, gemessen gemäß ASTM D412,
wobei jedes Harz einen MFR von etwa 2000 dg/min oder weniger aufweist, gemessen gemäß ASTM D1238, 2,16 kg, 230°C, und mindestens eine von der ersten, zweiten und dritten schmelzgeblasenen Schicht ein Propylen-α-Olefin-Copolymer mit einer Schmelzwärme von 75 J/g oder weniger umfasst.

15. Gegenstand nach Anspruch 14, der ein Kleidungsstück, eine Babywindel oder Inkontinenzwindel für Erwachsene, Trainingshosen für die Sauberkeitserziehung oder Inkontinenzunterwäsche oder ein Damenhygieneprodukt ist.

## Revendications

1. Procédé de formation d'un composite extrudé-soufflé multicouche, comprenant les étapes qui consistent à :
extruder-souffler un premier matériau pour former une première couche extrudée-soufflée ;
extruder-souffler un deuxième matériau pour former une deuxième couche extrudée-soufflée ; et
extruder-souffler un troisième matériau pour former une troisième couche extrudée-soufflée,
dans lequel chaque matériau est identique ou différent, chaque matériau contient au moins une résine ayant un indice d'écoulement à l'état fondu d'environ 2 000 dg/min ou moins, tel que mesuré selon ASTM D1238, 2,16 kg, 230 °C, et au moins l'un des premier, deuxième et troisième matériaux comprend un élastomère ayant une reprise d'au moins 70 % après une déformation de 100 %, telle que déterminée par ASTM D412.

2. Procédé selon la revendication 1, dans lequel chaque couche extrudée-soufflée a un grammage de 5 g/m² à 300 g/m².

3. Procédé selon la revendication 1, dans lequel la première couche extrudée-soufflée a un grammage de 5 g/m² à 300 g/m² ; la deuxième couche extrudée-soufflée a un grammage de 15 g/m² à 150 g/m² ; et la troisième couche extrudée-soufflée a un grammage de 5 g/m² à 300 g/m².

4. Procédé selon l'une quelconque des revendications 1 à 3, dans lequel la deuxième couche extrudée-soufflée comprend au moins 5 % en poids du copolymère d'un propylène-α-oléfine ayant une chaleur de fusion de 75 J/g ou moins (mesurée par calorimétrie différentielle à balayage).

5. Procédé selon l'une quelconque des revendications 1 à 4, comprenant en outre un étirage mécanique du composite multicouche dans le sens machine (SM), dans le sens travers (ST), ou dans le SM ainsi que dans le ST.

6. Procédé selon l'une quelconque des revendications 1 à 5, dans lequel la température de fusion (mesurée par calorimétrie différentielle à balayage) de la deuxième couche extrudée-soufflée est d'environ 325 °C ou moins.

7. Procédé selon l'une quelconque des revendications 1 à 6, dans lequel les première et troisième couches extrudées-soufflées comprennent un homopolypropylène, un polypropylène, un polyéthylène, ou des mélanges de ceux-ci.

8. Procédé selon l'une quelconque des revendications 1 à 7, dans lequel chaque matériau a un indice d'écoulement à l'état fondu (ASTM D1238, 2,16 kg, 230 °C) inférieur à 50 dg/min.

9. Procédé selon l'une quelconque des revendications 1 à 8, dans lequel la deuxième couche extrudée-soufflée représente au moins 10 % en poids du poids total du composite multicouche.

10. Procédé selon l'une quelconque des revendications 1 à 9, dans lequel la deuxième couche extrudée-soufflée est disposée entre les première et troisième couches extrudées-soufflées.

11. Procédé selon l'une quelconque des revendications 1 à 10, dans lequel chaque matériau est extrudé-soufflé sur une surface en mouvement.

12. Composite extrudé-soufflé multicouche, comprenant :
une première couche extrudée-soufflée comprenant une ou plusieurs résines ayant un allongement à la rupture de 50 % à 250 %, tel que mesuré selon ASTM D412 ;
une deuxième couche extrudée-soufflée comprenant une ou plusieurs résines ayant un allongement à la rupture de 200 % ou plus, tel que mesuré selon ASTM D412 ; et
une troisième couche extrudée-soufflée comprenant une ou plusieurs résines ayant un allongement à la rupture de 50 % à 250 %, tel que mesuré selon ASTM D412 ;
dans lequel chaque résine a un indice d'écoulement à l'état fondu d'environ 2 000 dg/min ou moins, tel que mesuré par ASTM D1238, 2,16 kg, 230 °C, et au moins l'une des première, deuxième et troisième couches extrudées-soufflées comprend un copolymère de propylène-α-oléfine ayant une chaleur de fusion de 75 J/g ou moins.

13. Composite extrudé-soufflé selon la revendication 12, dans lequel la température de fusion de la deuxième couche extrudée-soufflée est de 325 °C ou moins.

14. Produit manufacturé intégrant, sous la forme d'un ou plusieurs constituants, un composite extrudé-soufflé multicouche comportant :
une première couche extrudée-soufflée comprenant une ou plusieurs résines ayant un allongement à la rupture de 50 % à 250 %, tel que mesuré selon ASTM D412 ;
une deuxième couche extrudée-soufflée comprenant une ou plusieurs résines ayant un allongement à la rupture de 200 % ou plus, tel que mesuré selon ASTM D412 ; et
une troisième couche extrudée-soufflée comprenant une ou plusieurs résines ayant un allongement à la rupture de 50 % à 250 %, tel que mesuré selon ASTM D412 ;
dans lequel chaque résine a un indice d'écoulement à l'état fondu d'environ 2 000 dg/min ou moins, tel que mesuré par ASTM D1238, 2,16 kg, 230 °C, et au moins l'une des première, deuxième et troisième couches extrudées-soufflées comprend un copolymère de propylène-α-oléfine ayant une chaleur de fusion de 75 J/g ou moins.

15. Produit selon la revendication 14, le produit étant un vêtement, une couche pour bébé ou une couche d'incontinence pour adulte, une couche-culotte, un produit à ceinture élastique ou un produit d'hygiène féminine.
